# EUROPEAN PATENT SPECIFICATION

(11) **EP 2 372 954 B1**
(45) Date of publication and mention of the grant of the patent: **08.01.2014**
(21) Application number: 11165044.6
(22) Date of filing: 28.11.2004
(51) Int. Cl.: H04L 12/26, G06F 9/445, H04L 29/06, G06F 9/44, H04L 12/24, H04L 29/12

(54) **Method and system for collecting information relating to a communication network**
Verfahren und System zum Sammeln von Information bezüglich eines Kommunikationsnetzes
Procédé et système pour collecter d'informations rélatives à un réseau de communication

(30) Priority: 28.11.2003 US 525136 P
(43) Date of publication of application: 05.10.2011
(62) Divisional of application: 04819283.5
(73) Proprietor: INSIGHTIX LTD, Ra'anana 43665 (IL)
(72) Inventor: Arkin, Ofir, 21861 Carmiel (IL)
(74) Representative: Modiano, Micaela Nadia

(56) References cited:
- US-A- 5 508 941
- US-A- 5 809 238
- US-A1- 2003 133 443

## Description

### FIELD OF THE INVENTION

This invention relates to networks discovery, and more specific to collecting information relating to communication networks.

### BACKGROUND OF THE INVENTION

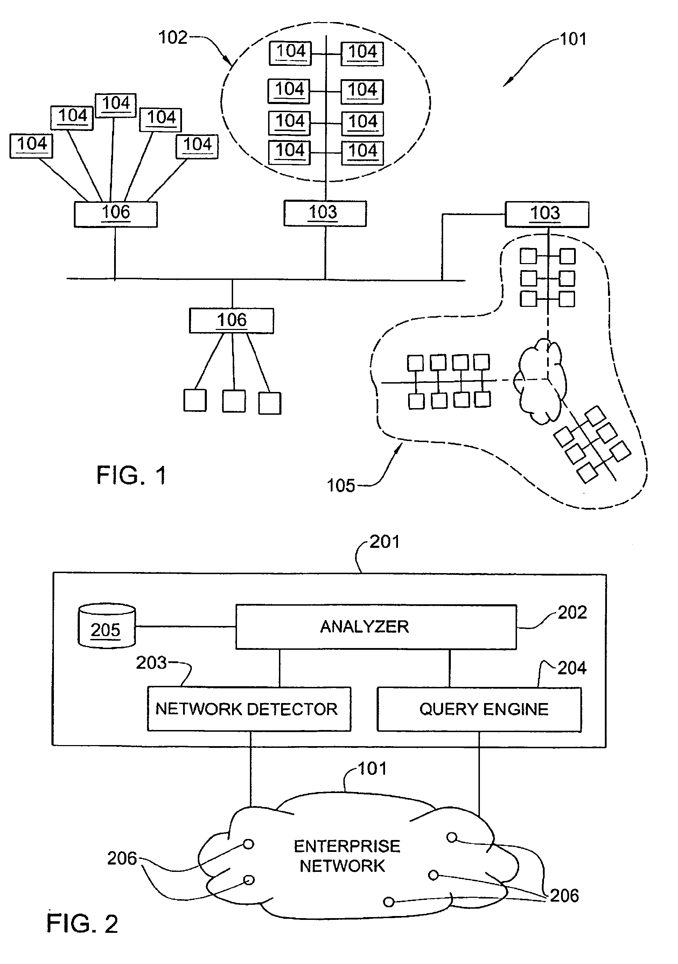

**Fig. 1** schematically illustrates an enterprise network **101.** An enterprise network can include one or more networks. For example, an enterprise network 101 can include several local area networks (LANs) **102.** In those cases when the enterprise network includes more than one LAN, the LANs are connected using routers **103.** A LAN has one or more computing devices **104,** i.e., one or more computing devices associated with the network. Those versed in the art can appreciate that Virtual LANs (VLANs) can be included too. Sometimes the enterprise network **101** can include also one or more virtual private networks (VPNs), constructed by using public wires to connect computing devices, such as **105,** As is known in the art, many other configurations can exist as well, and the ones illustrated in the figures are only exemplary configurations. For example, switches **106** can be used too.

The routers **103,** computing devices **104** and switches **106** are examples of "nodes" or "communication nodes" of the communication network.

Sometimes, a cluster of computers appear as a single computer to host computers outside the cluster. NAT (Network Address Translation) is a method for connecting multiple nodes (i.e., a cluster) to the network, exposing only a single IP address. When a node in a cluster sends a packet to an IP address not included in the cluster, the packet is transmitted to a NAT device, where the node's IP address is transparently translated to indicate the cluster's address. Then the packet is resent towards its destination. When a packet from an IP address that is external to the cluster is received by the NAT device, the packet carries the cluster's IP address. The NAT device that maintains information about open connections (sessions) and about nodes in the cluster, translates this address and replaces it by the destination node's private address in accordance with the maintained information, thus allowing this node to receive the packet. For example, US 5,371,852 (*"Method and apparatus for making a cluster of computers appear as a single host on a network",* Clement *et al.,* published 1994) discloses a method and apparatus for enabling a cluster of computers to appear as a single computer to host computers outside the cluster. A host computer communicates only with a gateway to access destination nodes and processes within the cluster. The gateway has at least one message switch, which processes incoming and outgoing port type messages crossing the cluster boundary. This processing comprises examining certain information on the message headers and then changing some of this header information either to route an incoming message to the proper computer node, port and process or to make an outgoing message appear as if originated at the gateway node. The message switch uses a table to match incoming messages to a particular routing function, which can be run to perform the changes necessary to correctly route different kinds of messages.

It is appreciated that a NAT device found in a communication network sometimes indicates that other nodes, not necessarily identifiable, can exist in the device's cluster, i.e., behind this NAT device.

In addition, The Dynamic Host Configuration Protocol (DHCP) provides a framework for passing configuration information to hosts on a TCP/IP network. DHCP is based on the Bootstrap Protocol (BOOTP), adding the capability of automatic allocation of reusable network addresses and additional configuration options. DHCP captures the behavior of BOOTP relay agents, and DHCP participants can interoperate with BOOTP participants.

According to Request For Comments (RFC) 2131, which is publicly available, DHCP is designed to supply DHCP clients with the configuration parameters defined in the Host Requirements RFCs. After obtaining parameters via DHCP, a DHCP client should be able to exchange packets with other hosts in the network, The TCP/IP parameters that are supplied in accordance with the DHCP protocol are listed in the RFC.

Not all of these parameters are required for a newly initialized client. A client and server may negotiate for the transmission of only those parameters required by the client or specific to a particular IP subnet.

RFC 2131 defines several DHCP messages to be exchanged between DHCP client and servers. Amongst are DHCPDISCOVER, DHCPOFFER, DHCPREQUEST, DHCPACK, DHCPNAK, DHCPDECLINE, DHCPRELEASE and DHCPINFORM,

Not all DHCP clients require initialization of all parameters listed in the RFC. Two techniques are used with DHCP to reduce the number of parameters transmitted from the server to the client. First, most of the parameters have defaults; if the client receives no parameters from the server that override the defaults, a client uses those default values. Second, in its initial DHCPDISCOVER or DHCPREQUEST message, a client may provide the server with a list of specific parameters the client is interested in. If the client includes a list of parameters in a DHCPDISCOVER message, it MUST include that list in any subsequent DHCPREQUEST messages.

There are other network protocols known in the art. For example, RFC 826 (published 1982), which is publicly available, deals with an Address Resolution Protocol (ARP). The ARP protocol presented in RFC 826 allows dynamic distribution of information needed to build tables, the tables are used for translating addresses in some protocol address space (for example: addresses in the Internet Protocol, IP, address space) into Ethernet addresses. RFC 903 (published 1984), on the other hand, defines a Reversed Address Resolution Protocol (RRAP), that reverses RFC 826. That is RFC 903 suggests a method for workstations to dynamically find their protocol address (e.g., their IP Address), when they know only their hardware address (e.g., their attached physical network address).

RFC 793 (published 1981), which is publicly available, describes the Transmission Control Protocol (TCP). According to RFC 793, the procedure of establishing a connection involves exchanging three messages. This exchange has been termed a three-way hand shake. A connection is initiated by the rendezvous of an arriving segment containing a SYN (i.e., synchronize control flag) and a waiting TCB (Transmission Control Block) entry each created by a user OPEN command. The matching of local and foreign sockets determines when a connection has been initiated. The connection becomes "established" when sequence numbers have been synchronized in both directions.

The clearing of a connection also involves the exchange of segments, in this case carrying the FIN control flag. A segment carrying a SYN control flag is commonly referred to as a "SYN packet", while a segment carrying a FIN control flag is referred to as a "FIN packet".

TCP provides a means for the receiver to govern the amount of data sent by the sender. This is achieved by returning a "window" with every ACK indicating a range of acceptable sequence numbers beyond the last segment successfully received. The window indicates an allowed number of octets that the sender may transmit before receiving further permission.

The TCP header includes an "options" field. The options field may contain several options, and each option may be several octets in length. The options are used, for example, in testing situations; for example, to carry timestamps. Both the Internet Protocol (IP) and TCP provide options fields.

RFC 972 (published 1981), which is publicly available, describes the Internet Control Message Protocol (ICMP) that is an extension of the Internet Protocol (IP). However, ICMP is actually an integral part of IP. ICMP messages are sent in several situations: for example, when a datagram cannot reach its destination, when the gateway does not have the buffering capacity to forward a datagram, or when the gateway directs the host to send traffic on a shorter route. According to RFC 972 the purpose of these control messages is to provide feedback about problems in the communication environment. Examples of known utilities using ICMP messages are *ping* and *traceroute.*

Collecting information relating to a communication network has long been a subject for investigation in the art. For example, according to US 5,297,138 *("Determining physical topology across repeaters and bridges in a computer network",* published 1994), the physical topology of devices on a network is determined. All the devices on the network are identified and a first device is selected. For each port of the first device a connection structure is recursively determined for all devices which communicate to the first device through the port.

US 5,933,416 (*"Method of determining the topology of a network of objects",* published 1999) discloses a method of determining network topologies. According to US 5,933,416, traffic received by devices connected in the network and traffic emitted out of the devices is monitored. Traffic out of the devices is correlated with traffic into the devices, and if the correlation of traffic out of one of the pair of the devices and into another of the pair of the devices is in excess of a predetermined threshold, a network communication path between a pair of the devices is being indicated,

US 6,628,623 (*"Methods and systems for determining switch connection topology on ethernet LANs",* Published 2003) describes a method of determining an Ethernet LAN switch topology. The method includes a) establishing a communications link between a network management server and a switch in an Ethernet LAN, thereby defining the switch as a root switch; b) identifying each of a plurality of switches attached to the Ethernet LAN, each switch of the plurality of switches includes at least one identifiable port; c) generating a mapping of each of the switches, the mapping including a list for each of the ports of the switches that each of the ports sees; d) eliminating from the mapping each upwardly looking one of the ports; e) identifying in the mapping at least one leaf connected to at least one of the ports; f) maintaining in a topological mapping at least one relationship between the leaves and the ports connected to the leaves; g) eliminating from the list for each of the ports each of the leaves that each of the ports sees; and h) repeating steps e)-g) until all of the leaves are identified.

According to US 6,697,338 (*"Determination of physical topology of a communication network",* published 2004) physical connectivity is determined between elements such as switches and routers in a multiple subnet communication network. Each element has one or more interfaces each of which is physically linked with an interface of another network element. Address sets are generated for each interface of the network elements, wherein members of a given address set correspond to network elements that can be reached from the corresponding interface for which the given address set was generated. The members of first address sets generated for corresponding interfaces of a given network element, are compared with the members of second address sets generated for corresponding interfaces of network elements other than the given element. A set of candidate connections between an interface of the given network element and one or more interfaces of other network elements, are determined. If more than one candidate connection is determined, connections with network elements that are in the same subnet as the given network element are eliminated from the set.

While the publications cited so far disclose active methods and systems, i.e., methods that query the network for collecting information, there are also passive methods that are used for collecting information relating to a communication network by detecting traffic transmitted and/or received by nodes in the network.

For example, US 5,097,469 (*"Passive monitor for bi-oadcast communication network",* published 1992) discloses a network monitor that passively detects sequences of control frame transmissions. Detected control frame sequences are compared to a model of the expected exchange of control frames. The monitor concludes that a malfunction has occurred when the detected control frame sequences do not match the frame sequences indicated by model. US 5,097,469 further explains that the passive monitor listens to transmitted control and data frame traffic on a LAN. The monitor is truly passive in that it does not initiate communications over the LAN, but merely receives and interprets control and data frame traffic.

US 5,958,010 (*"Systems and methods for monitoring distributed applications including an interface running in an operating system kernel",* published 1999) presents systems and methods for automated monitoring and management of distributed applications, client/server databases, networks and systems across heterogeneous environment. US 5,958,010 employs distributed, automated intelligent monitoring agents that monitor continuously the network environment in real time, including monitoring of data passed between clients and servers in the network. The data can be collected and employed for trouble shooting trend analysis, resource planning, security auditing, accounting and chargeback, as well as other applications.

US 6,795,403 (*"Automatic discovery of switch devices in a network"* published 2004) describes a method and an apparatus that provide automatic discovery of switch devices in a switched network. A remote monitor agent of a router is modified to detect packets received at the router that contain multicast destination addresses, e.g., packets that contain Bridge Protocol Data Units (BPDUs). Each packet is examined to determine a transmitting device identifier and a root device identifier value from the packet. The transmitting device identifier value and root device identifier value are associated with one or more switches in a managed network. The remote monitor agent determines the IP addresses that correspond to the transmitting device identifier value and root device identifier value, e.g., using reverse lookup approach. The IP address values, or other identifying information about the discovered switches, are stored in a MIB table.

Collecting information relating to a communication network is dealt with not only in patent publications. To this end, see the article *"*Combining active and passive network measurements to build scalable monitoring systems on the grid" (ACM SIGMETRICS Performance Evaluation Review, Vol. 30, Issue 4, March 2003, found on the Internet at http://portal.acm.org/toc.cfm?id=773056&type=issue&coll=GUIDE&dl=GUIDE &CFID=32448838&CFTOKEN=34722082) by Lowekamp, Bruce B. *et al.* explains that the network provides wires that connect a grid, therefore, understanding the performance provided by a network is crucial to achieving satisfactory performance from many grid applications. The problem of monitoring a global grid is complicated, in light of the costs and scalability challenges of actively injecting measurement traffic to the network, and in light of the challenges of information access and accuracy of passively collected measurements. By combining active and passive monitoring techniques, it is possible to reduce the need for invasive measurements of the network without sacrificing measurement accuracy on either the WAN or LAN levels. Specifically, the article presents topology-based steering, which dramatically reduces the number of measurements taken for a system by using passively acquired topology and utilization to select the bottleneck links that require active bandwidth probing.

The article *"*The Present and Future of Xprobe2, The Next Generation of Active Operating System Fingerprinting" (Ofir Arkin et al., published on the Internet on July 2003, see http://www.sys-security.com/archive/papers/Present and Future Xprobe2-v1.0.pdrf) describes a system performing active operating system fingerprinting. According to *The Present and Future of Xprobe2,* active operating system fingerprinting is the process of actively determining a targeted network node's underlying operating system by probing the targeted system with several packets and examining the response(s) received.

*"*Ambiguity Resolution via Passive OS Fingerprinting" (Greg Taleck, published on the internet on 2004, see http://www.nfr.com/resource/whitePaper.php) describes a method and implementation of dynamically resolving protocol ambiguities based on the passively fingerprinted host operating system type.

US 2003/133443 A relates to controlled routing of data over networks using passive flow techniques for analyzation. More specifically, it is related to a method comprising passively monitoring at least one data flow characteristic associated with a data flow on a first path, comparing the at least one data flow characteristic, associated with the data flow on the first path, to an associated data flow requirement of a policy, switching the data flow to a second path if the at least one data flow requirement is not met, passively monitoring at least one data flow characteristic associated with the data flow on the second path, and comparing the at least one data flow characteristic associated with the data flow on the second path with the associated data flow requirement of the policy.

US 5 809 238 A describes a data server database system which applies a request for data to a data engine which launches a probe via network transport that causes the data to be collected on a remote platform and returned via network transport. The returned data is then applied to the requesting user application in the form of one or more rows of columnar data emulating the return of data from a conventional database system including data tables. The user application stores a rule statement in the data server and then references that statement by name in a data inquiry. An event level data probe is invoked to collect the data referenced in the rule statement and the collected data is tested in accordance with the rule statement to determine if the event has occurred.

US 5 508 941 A describes a telecommunication network with surveillance sensors and a diagnostic system comprising equipment for conveying signals to network users, sensors for supplying data on network operation and a diagnostic system processing this data to establish diagnostics designating causes of degraded operation.

The approach described in this paper uses the passively detected OS fingerprint of an end host in an attempt to correctly resolve ambiguities between different network stack implementations. Additionally, a new technique is described to increase the confidence level of a fingerprint match by looking more extensively at TCP connection negotiations,

Thus, there is a need in the art for a system and method that combines active and passive detection and active query of information relating to a communication network.

### SUMMARY OF THE INVENTION

Certain aspects of the presently disclosed subject matter are reflected in the appended claims.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** schematically illustrates an exemplary enterprise network;
**Fig. 2** is a block diagram illustrating a network information collector associated with an enterprise network, according to one embodiment of the invention;
**Fig. 3** is a block diagram illustrating a manageable network information collector associated with an enterprise network, according to one embodiment of the invention;
**Fig. 4A** is a flowchart illustrating in detail the operation of the network detector, according to one embodiment of the invention;
**Fig. 4B** is a flowchart illustrating in detail the operation of the network detector, according to an alternative embodiment of the invention;
**Fig. 5** is an exemplary detection list, according to one embodiment of the invention;
**Fig. 6** is a block diagram illustrating a network detector, , according to one embodiment of the invention;
**Fig. 7** is a block diagram illustrating an analyzer in detail, according to one embodiment of the invention;
**Fig. 8** is a block diagram illustrating an analyzer, according to a different embodiment of the invention;
**Fig. 9** is a flowchart illustrating nodes detection, according to one embodiment of the invention;
**Fig. 10** illustrates exemplary DHCPDISCOVER messages that are exchanged by different operating systems;
**Fig. 11** is a flowchart illustrating OS discovery based on detected DHCP messages, according to one embodiment of the invention;
**Fig. 12** illustrates exemplary SYN packets that are exchanged by different operating systems;
**Fig. 13** is a block diagram illustrating an operating system monitor, according to one embodiment of the invention;
**Fig. 14** is a flowchart illustrating OS discovery based on detected data, according to one embodiment of the invention;
**Fig. 15** is a block diagram illustrating an operating system monitor using DHCP messages, according to one embodiment of the invention;
**Fig. 16** is a flowchart illustrating NAT device detection, according to one embodiment of the invention;
**Fig. 17** is a flowchart illustrating identifying missing information, according to one embodiment of the invention;
**Fig. 18** is a block diagram illustrating the query engine, according to one embodiment of the invention;
**Fig. 19** is a flowchart illustrating in general the operation of a query engine, according to one embodiment of the invention;
**Fig. 20** is a flowchart illustrating nodes exploration, according to one embodiment of the invention;
**Fig. 21** is a flowchart illustrating protocols and services exploration, according to one embodiment of the invention;
**Fig. 22A** illustrates an exemplary list of fingerprints characterizing the Microsoft Windows 2000 operating system; and
**Fig. 22B** illustrates an exemplary list of fingerprints characterizing the Microsoft Windows 2003 operating system.

### DETAILED DESCRIPTION OF EMBODIMENTS

In the following description components that are common to more than one figure will be referenced by the same reference numerals.

In addition, several Requests For Comments (RFCs) were mentioned in the background of this specification, all are already accepted as standards. Yet, it is noted that these RFCs, like any suggested or accepted modification to the standards do not form any limitation on the invention disclosed below.

Furthermore, in communication terms such as "packet", "message", "datagram" etc. are commonly used to describe a unit of data transition on a physical network. For example, TCP/IP units are commonly referred to as packets, while HTTP units are commonly referred to as messages. In the description below the usage of the terms (even when these are interchanged) does not limit the invention, and any term describing a unit of data is applicable regardless of known conventions, unless specifically noted. For example, "HTTP packets" should be considered similarly to "HTTP messages" or even "HTTP requests".

**Fig. 2** is a block diagram illustrating a network information collector **201** associated with an enterprise network **101,** according to one embodiment of the invention. The network information collector consists of an analyzer **202** coupled to a network detector **203,** and to a query engine **204.** The analyzer **202** is also coupled to a storage device **205,** for example, a database, to where it can write and/or read data.

It is noted that the storage device **205** illustrated in **Fig. 2** is in direct connection with the analyzer **202,** therefore it is included in the network information collector **201.** Alternatively, it is appreciated that the storage device can be coupled by any other known method. For example, the storage device can be a networked database coupled to the analyzer via the Internet or it can be part of the analyzer **202.** In other embodiments the storage device **205** can also be coupled to the network detector **203** and/or to the query engine **204** instead of or in addition to being coupled to the analyzer. Thus, the storage device **205** can be external to the network information collector **201** or located remotely therefrom, and it is therefore considered as associated therewith. In addition, it should be realized that the storage device can be, for example, a disk, a memory device (such as RAM), a RAID (Redundant Array of Independent, or Inexpensive Disks) or any other available device that can be used for storage of data.

Similarly, the analyzer **202,** the network detector **203** and the query engine **204** can also be coupled in any known way applicable to the case, such as via direct communication lines, via the Internet, or even by being employed in a single machine. They, too, can be remote from each other and therefore the analyzer **202,** the network detector **203** and the query engine **204** are also considered as associated with the network information collector **201.**

The network detector and the query engine have access to the enterprise network **101,** allowing the network information collector **201** to collect information corresponding thereto. As was previously explained, with reference to **Fig. 1****,** the enterprise network **101** can consist of a single LAN or it can consist of a complicated configuration of any number of different networks. Alternatively the enterprise network **101** can also be part of a larger network. As it will be illustrated below, this has no affect on the operation of the network information collector **201.** Therefore, unless specifically noted, the terms "network", "communication network" and "enterprise network" will be used interchangeably hereinafter.

The network detector **203** harvests, or in other words detects data conveyed by nodes (such as **103, 104, 106)** operating in the communication network **(101).** One way to detect data is by using one or more probes, commonly known today, such as sniffers and/or other probes that allow detection of data transmitted in a communication network. In order to detect substantially the entire data conveyed by the nodes in a network, it is sometimes required to use more than one probe. For example, if the enterprise network consists of more than one LAN, wherein each LAN is connected to the enterprise network via a router connected at its gateway, it is sometimes required to connect a probe to each LAN. That is, the network detector **203** can be coupled to more than one probe. Alternatively, there can be more than one network detector **203,** each coupled to one probe, or a combination thereof (i.e., more than one network detector **203,** one or more of which is coupled to one probe, while others are coupled to multiple probes). In **Fig. 2** the probes are schematically illustrated by the reference numerals **206,**

The network detector **203** operates in a manner that is transparent to the nodes and to the network. That is, the network detector does not convey data to nodes in the communication network; nor do the nodes convey data thereto. Thus, the network detector operates passively in the communication network.

On the other hand, the query engine **204** collects information relating to the network and/or to nodes therein by probing them. For example, the query engine can transmit one or more datagrams to one or more nodes in the network. The queried nodes' response to the transmitted datagrams can be used in order to collect information about the nodes and the network. Thus, the network detector operates actively in the communication network.

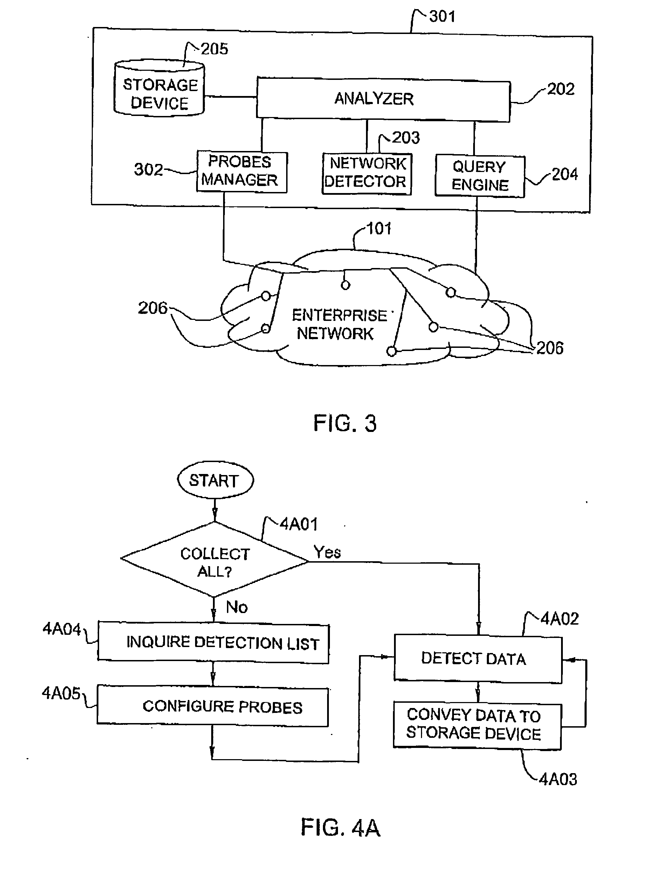

**Fig. 3** is a block diagram illustrating a manageable network information collector **301** associated with an enterprise network, according to another embodiment of the invention. Like **Fig. 2****,** the manageable network information collector includes an analyzer **202,** a network detector **203,** a query engine **204** and a storage device **205.** However, the system **301** also includes a probes manager **302.** The probes manager **302** is coupled to probes **206** in order to manage and monitor their operation. For example, if one probe is a sniffer that ceased operating, the probes manager **302** detects that the sniffer is not operable and it can restart it. The probes manager **302** can also update software versions operating on the probes; control the probes' operation etc. In the embodiment illustrated in the network information collector **301** the probes manager 302 is coupled to the analyzer **202,** wherein the analyzer controls and monitors the probes manager's its operation. However, this is not obligatory, and for example, the probes manager can be controlled manually.

It is appreciates that although not shown, the query engine **204** can also connect to different segments and subnets of the network **101,** allowing collection of information relating to the different segments and subnets.

Being transparent to the network, the network detector **203** relies on the network's activity in order to detect data conveyed by nodes operating therein. Unlike the query engine **204,** the network detector **203** is not required to transmit packets to nodes in the network in order to collect information relating thereto. The network detector **203** detects data that is conveyed by the nodes as part of their communication scheme, as if the network detector **203** does not exist. As such, it does not affect the performance of the network and the nodes.

It is appreciated that datagrams transmitted over a communication network include information relating to the communication network, such as identification of MAC (Media Access Control) addresses, IP addresses, operating systems' fingerprints, indications of outings and runtime information relating to software programs and computing processes, such as identification of the running process and/or user identification etc. It is further noted that a running process in this connection can be a process using network communication (referred to as a "network process") or a process running locally on a node (referred to as a "local process"). For example, there are known tools that allow remote control over locally running applications, such as "telnet" (such applications are generally referred to as "remote controllers"). Thus, datagrams transmitted by such a remote controller or received thereby can include information relating to local processes.

Further to detecting a packet by the network detector, the analyzer 202 can analyze the packet in order to retrieve information stored therein, information relating to the communication network. However, it is appreciated that analyzing each of the detected packets creates heavy load on the analyzer. Knowing what information is required to be collected by a network information collector, it is possible to reduce load on the analyzer by analyzing only those packets that are potentially relevant. That is, it is possible to analyze only those detected packets that include information that is part of the required information or that is used as basis to computations that reveal information relating to the communication network, such as statistical computations.

For example, one embodiment of the invention can analyze only SYN (synchronize) packets and application related data, another embodiment can analyze ARP (Address Resolution Protocol) packets and DHCP (Domain Host Control Protocol) messages while a different embodiment can analyze SYN packets, DHCP packets and application related data such as HTTP messages.

One way or another, according to the invention, detected packets constitute detected data, while following the description above it is understood that detected data are those packets that are required for analysis. For example, in a certain embodiment that does not perform SYN packets analysis SYN packets can be skipped. If SYN packets are skipped the detected data does not include SYN packets. Yet, this is non-limiting and there can be an embodiment wherein detected data includes any data detected over the network.

**Fig. 4A** is a flowchart illustrating in detail the operation of the network detector **203,** according to one embodiment of the invention. According to this embodiment, a "collect-all" flag indicates whether the network detector **203** should detect all the data transmitted over the network or only those packets that are required for analysis. If (on **4A01)** the collect-all flag indicates that all the data should be collected, the network detector detects **4A02** any packet transmitted on the network and accessible thereto, and conveys **4A03** this packet to the storage device **205.** According to the flowchart of **Fig. 4A****,** the collect-all flag is a binary variable. When the collect-all flag stored the value one (1), this is indicative that all the data should be detected, while the value zero (0) indicates that only required packets are to be collected. Yet, this is non-limiting and any other convention or indication method is applicable,

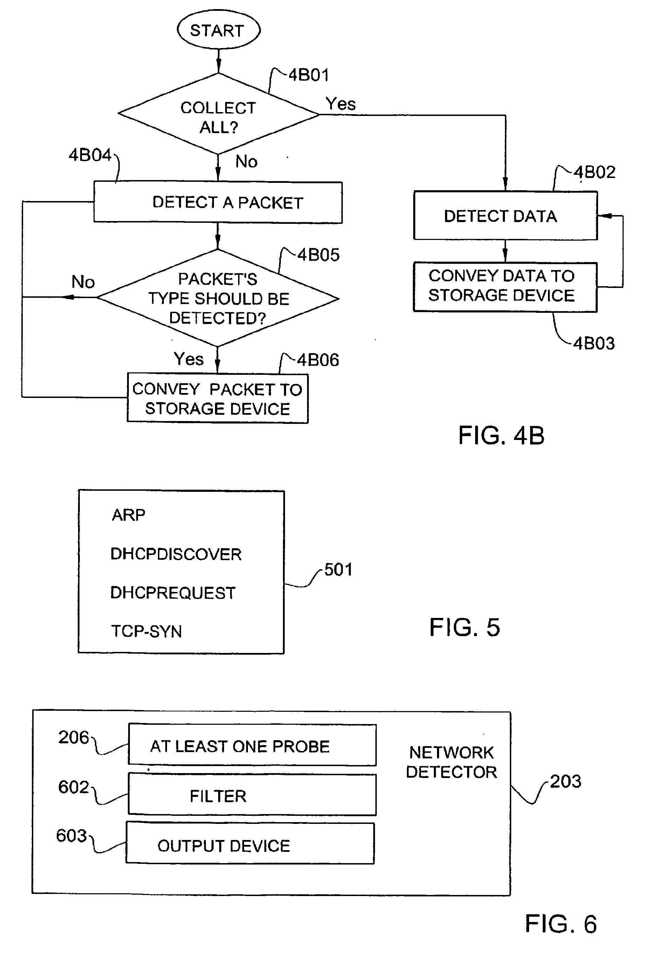

However, if on **4A01** the collect-all flag indicates that only part of the network traffic constitutes the detected data, a list of detectable packet types is inquired (the list is referred to as "detection list"), the detection list indicates what data packets are to be detected by the network detector. For example, if the network detector is required to detect only DHCP packets and ARP packets, the detection list should include DHCP and ARP. It is appreciated that sometimes only part of the DHCP packets, for example, are to be detected (for example, only DHCPDISCOVER and DHCPREQUEST). In this case the detection list should include only those packets that are required. **Fig. 5** illustrates a detection list **501** that indicates that any ARP packet, DHCPDISCOVER packets, DHCPREQUEST packets and TCP-SYN packets are to be detected. According to the embodiment of **Figs. 5** and **4A****,** the detection list **501** is managed in accordance with a positive policy, saying that packet-types included in the detection list are to be detected. Alternatively, a negative policy is allowed as well, wherein the packet-types listed in the detection list are to be ignored. In this case the network detector should detect any packet whose type is not listed in the detection list.

Returning to the exemplary flowchart of **Fig. 4A****,** on **4A04** the detection list is inquired, wherein in this example the detection list follows a positive policy. On **4A05** the network detector **203** configures the probes **206** to detect only those required packet types included in the detection list. It is known in the art that sniffers, for example, can be configured to detect only certain packet-types while other packet-types are being ignored.

After configuring the probes, the network detector starts to detect data **(4A02)** and convey the detected data **(4A03)** to the storage device as described before.

It is appreciated that the network detector continues to detect data and convey it to the storage device as long as its operation is not stopped, for example by a user selecting to shutdown of the system.

The embodiment of **Fig. 4A** is non-limiting and there can be different embodiments doing the same. **Fig. 4B** is a flowchart illustrating in detail the operation of the network detector, according to an alternative embodiment of the invention. If the collect-all flag indicates (in **4B01)** that all the data transmitted over the network should be detected, then the network detector starts to detect data **(4B02)** and convey **(4B03)** the detected data to the storage device as with **Fig. 4A****.** However, if the collect-all flag indicates that only part of the transmitted data should be detected, the network detector can detect a packet on **4B04,** wherein on 4B05 every detected packet is confronted with the detection list. If the detection list indicates that the packet's type should be detected, the packet is conveyed to the storage device **4B06.**

According to the embodiments illustrated so far (such as the embodiments of **Figs. 4A** and **4B****),** detected data are conveyed to the storage device **205,** where they are stored. The analyzer **202** then retrieves the data therefrom for analysis. Yet this is non-limiting and different embodiments can avoid storage of the data by conveying them directly to the analyzer **202** for analysis. Still other embodiments can store the detected data on a different storage device than the storage device **205.**

**Fig. 6** is a block diagram illustrating a network detector **203,** according to one embodiment of the invention. The network detector **203** includes at least one probe **206** capturing data relating to networking traffic; a filter **601** for isolating from captured data networking data that includes information about the communication network; and an output device **602** for conveying the information included in the networking data. The data can be conveyed to a storage device. Alternatively, the data can be conveyed directly to the analyzer **202** for processing thereby.

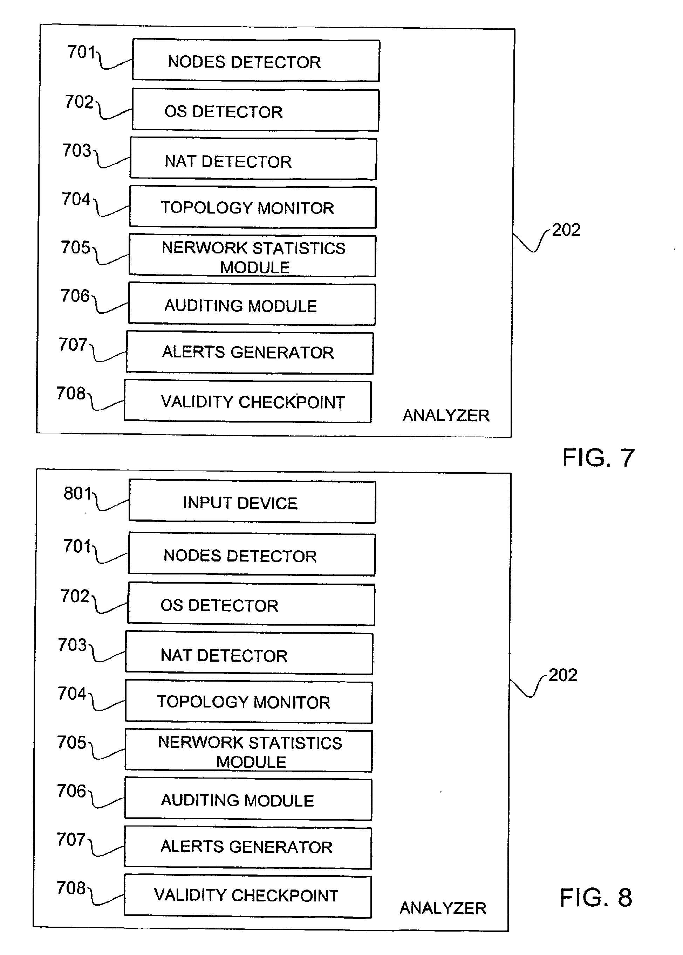

**Fig. 7** is a block diagram illustrating an analyzer **202** in detail, according to one embodiment of the invention. According to this embodiment, the analyzer includes several modules of operation, namely, a nodes detector **701,** an operating system (OS) monitor **702,** a NAT detector **703,** a topology monitor **704,** a network statistics module **705,** an auditing module **706,** an alerts generator **707** and a validity checkpoint **708.**

Yet, the analyzer **202** of **Fig. 7** is non-limiting and there can exist alternative analyzers that include only part of the described modules **(701 - 708),** different modules and/or additional modules. An example to such an alternative module is a users monitor that identifies and monitors in real time who is logged into any node in the network, It is appreciated that the analyzer can also include one or more application monitoring modules, as will be described below,

Some of the analyzer's modules compute, each, one or more different characteristics of the communication network (including characteristics of nodes included in the communication network). Such modules are, for example, the nodes detector **701** that identifies nodes operating in the network; the OS monitor **702** identifying operating systems operative on detected nodes; the NAT detector **703** that identifies NAT devices; the topology monitor **704** that detects and monitors the topology of the network; and the auditing module **706,** detecting sessions (such as information to a TCP/IP session) and providing information, about them.

In addition, the analyzer **202** can include modules that provide services to other modules such as the characteristics determination modules. For example, the network statistics module **705** performs statistical computations that are used, for example, while identifying a NAT device. The validity checkpoint 708 checks that data stored on the storage device or conveyed to the analyzer are valid data. Data that are identified as non-valid should not be used for collecting information relating to the communication network, however, an alert can be generated by the alerts generator, indicating the detection of non valid data, There can exist alternative and/or additional modules that provide services to other modules, such as a module that retrieves historical data stored in the storage device, wherein the historical data are used by the statistics module for statistical computations performed therein, and wherein the data retrieved are according to criteria determined during the statistical computations.

The alerts generator **707,** is an example of a module that provides alerts to the operator when pre-determined events occur in the network. For example, a certain user, who has limited access rights to a certain node in the network, tries to log into this certain node.

It was previously mentioned that the analyzer can include also application monitoring modules. Different applications use standard or proprietary protocols to communicate. Knowing the communication protocol allows the analyzer (or more specifically, the application's respective monitor) to analyze datagrams transmitted by the application during communication. For example, it was previously mentioned that there are remote controllers in the market, such as "telnet". Knowing the protocol used by telnet to communicate between the peers, a "telnet monitor" can analyze the telnet datagrams and conclude about the control operations performed by the telnet operator. Furthermore, understanding the telnet datagrams allows collecting information about local running processes, operating on the remote peer.

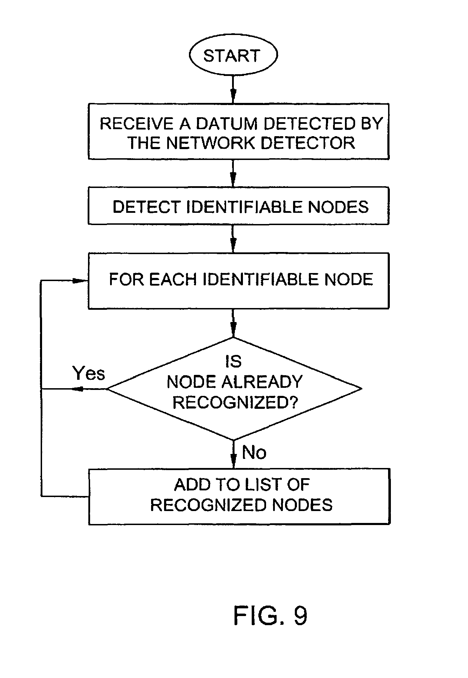

Turning now to describe in details the different modules of the analyzer **202** illustrated in **Fig. 7****,** it is appreciated that legitimate data conveyed by a node operating in a communication network identifies that node by at least one detectable way. For example, an ARP and/or a RARP packet, basically used for mapping an IP address to its respective MAC (Media Access Control, layer 2) address and *vice versa,* includes at least a MAC address of the sending node (referred to also as the "source node"). Furthermore, in many cases the data includes identification of the data source as well as the data destination. For example, TCP/IP packets typically include identification of the source and destination IP addresses. Thus, the nodes detector **702** can analyze each detected datagram (may it be a packet or a higher level message), study its fields in order to identify identifiable nodes, and if one or more of these nodes are not yet recognized by the network information collector, add these nodes to a list of recognized nodes, for example, by creating a record for this node in a database. Alternatively, when the nodes detector **702** identifies a newly detected node, it can convey its identity to different modules, instead of inserting it to the list of nodes. **Fig. 9** is a flowchart illustrating nodes detection, according to one embodiment of the invention.

It is noted though, that different types of nodes exist, such as a router, a switch, a personal computer, a workstation etc., each having its respective set of characteristics.

Turning now to the topology monitor **704,** it is appreciated that currently in the art there are known methods for determining topology of a network based on data detected on that network. See, for example, US 6,795,403, cited in the background of this specification. The topology monitor **704** can use any method applicable to the case in order to determine the topology of the network.

For example, according to one embodiment the topology monitor **704** can detect and analyze ARP and/or RARP packets. A person versed in the art will appreciate that ARP and RARP packets indicate data such as manufacturers and types of Network Interface Cards (NICs) that are installed on nodes in a network. According to this embodiment, detecting and analyzing this data provides, for example, information about the topology of the network (e.g., about the existence of the node and its connection to the network) and about the network connectivity. Thus, it is possible to identify, for example, that the network includes several LANs, or that a certain segment of the network consists of a wireless network, another segment consists of copper wired Ethernet and yet another segment consists of optical communication, It is appreciated that by detecting ARP packets, for example, the topology monitor **704** can construct routing tables that correspond to the routing tables used in the network, thus routing information can be detected as well.

Different standards (see, for example RFCs 793 or 2131) leave some degrees of freedom to the communicating nodes. According to the invention, it is realized that different operating systems tend to use different parameters and/or different values that are characteristic of the communicating operating system. By determining these characteristic parameters, it is possible to inspect detected packets in order to identify the communicating operating systems that operate on communicating nodes.

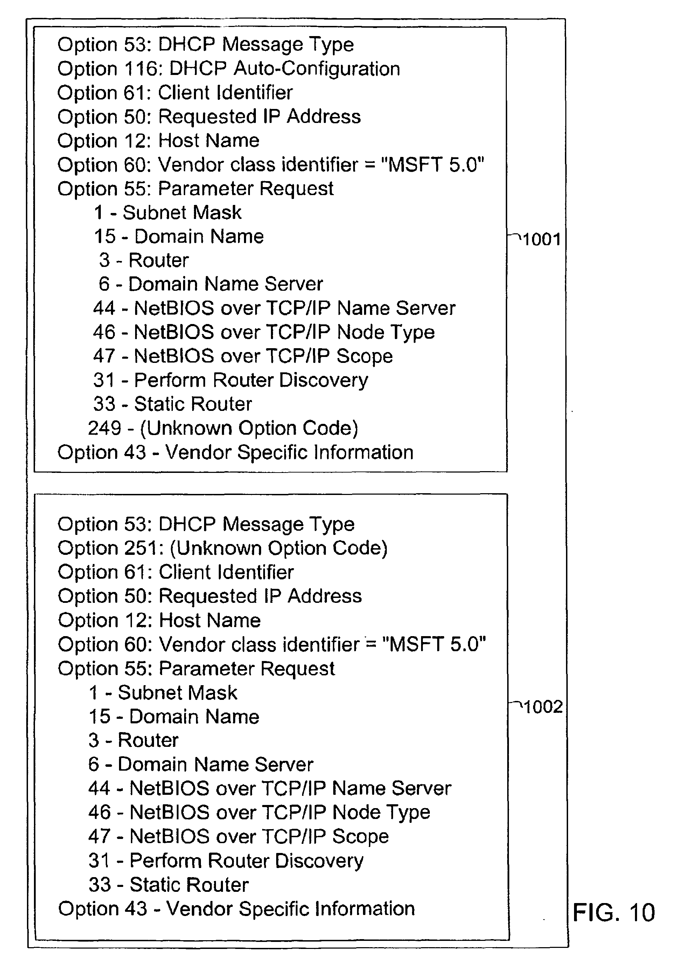

The OS monitor **702** analyzes, for example, DHCP messages in order to identify the operating systems that operate on the nodes from where the DHCP messages were sent. Turning now to disclose DHCP analysis, it is realized that different operating systems can include, for example, different DHCP options in their exchanged DHCP messages. **Fig. 10** illustrates exemplary DHCPDISCOVER messages, exchanged by different operating systems and including different DHCP options. Two messages of two different operating systems are included in the figure. Message **1001** is a DHCPDISCOVER message sent by a Microsoft Windows XP operating system, while message **1002** is a DHCPDISCOVER message sent by a Microsoft Windows 2000 operating system. It is seen that Windows XP, for example, includes option 116 in its DHCPDISCOVER messages, while Windows 2000 includes option 251. In addition, the Parameter Request option in a Windows XP DHCPDISCOVER message includes ten parameters, while in Windows 2000 the Parameter Request option includes nine parameters. Knowing this, a person having skills in the art will appreciate that DHCPDISCOVER messages, can, for example, be used in order to identify the operating system operating on a node that exchanges DHCP messages.

Yet, it is appreciated that this example is non-limiting and other differences except the options and the number of parameters included in the Parameter Request option can be used too. In addition, other DHCP messages can be used apart from DHCPDISCOVER messages. For example, the xid/transaction id of the BOOTP (Bootstrap Protocol) messages can be used in addition or instead.

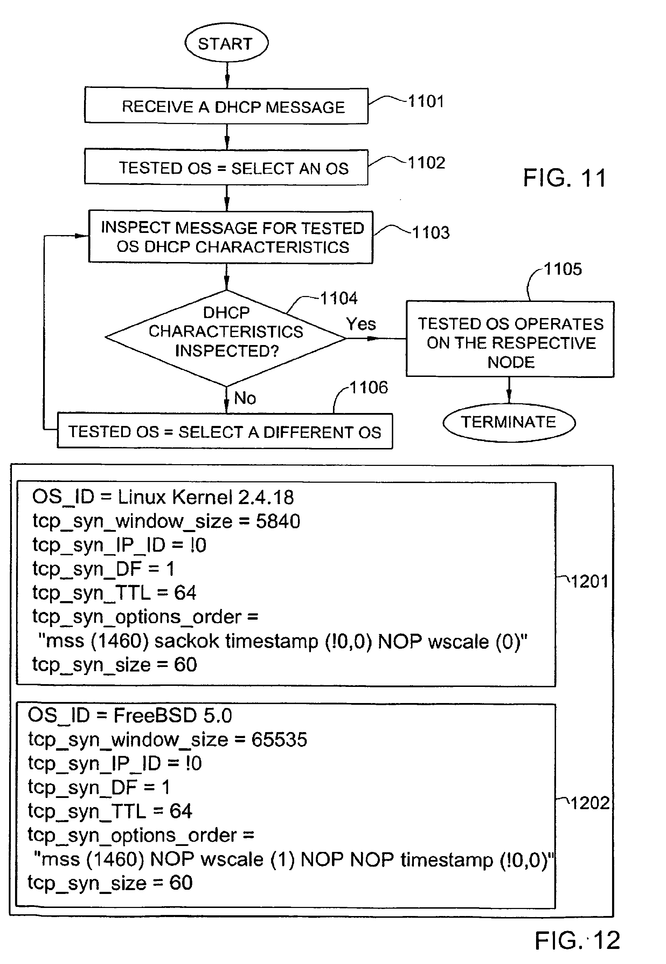

**Fig. 11** is a flowchart illustrating OS discovery based on detected DHCP messages, according to one embodiment of the invention. On **1101** the OS monitor **702** received a DHCP message. It is appreciated that the OS monitor can receive the DHCP message by any applicable way. For example, it can receive it directly from the network detector, or it can retrieve it from the storage device. The OS monitor **702** has knowledge of several operating systems and their respective DHCP characteristics. Therefore, when a DHCP message is received, the OS monitor selects one OS out of those it has knowledge about (see **1102)** and then, on **1103,** it inspects the DHCP message to see if the selected operating system's characteristics appear therein. If so **(1104),** the OS monitor identifies the selected OS as the OS operating on the node from where the DHCP message was sent. However, if the characteristic parameters do not appear in the received message, the OS monitor selects a different operating system (out of the operating systems it has knowledge about) and inspects the DHCP message if this operating system's characteristic parameters appear therein. A person having knowledge in computing will appreciate that if all the operating systems that the OS monitor **702** has knowledge of are checked and no matching is found, the OS monitor is unable to identify the operating system that is operating on the sending node in accordance with the illustrated method.

Yet, there are alternative methods allowing identification of an operating systems based on detected data. For example, one such method relies on analysis of SYN packets; another relies on analysis of SYN request and their respective SYN-ACK responses, etc.

Like the DHCP standard, the TCP standard (see, for example, RFC 793) also leaves some degrees of freedom to the communicating nodes. For example, the window size is not predetermined in the standard.

**Fig. 12** illustrates exemplary SYN packets that are exchanged by Linux with Kernel 2.4.18 **(1201)** and by FreeBSD 5.0 **(1202).** It can be seen in the example illustrated in the figure that with Linux (Kernel 2.4.18) the window size is equal to 5840, while with FreeBSD 5.0 it is equal to 65535. It is appreciated that this difference is non-limiting and other differences can be realized as well. For example, the TCP options used are also different. In addition, other operating systems can illustrate different characteristics too. However, knowing an operating system's respective characteristics it is possible to identify whether a SYN-request message was sent by a node on which this operating system operates, or is it a different operating system that operates thereon.

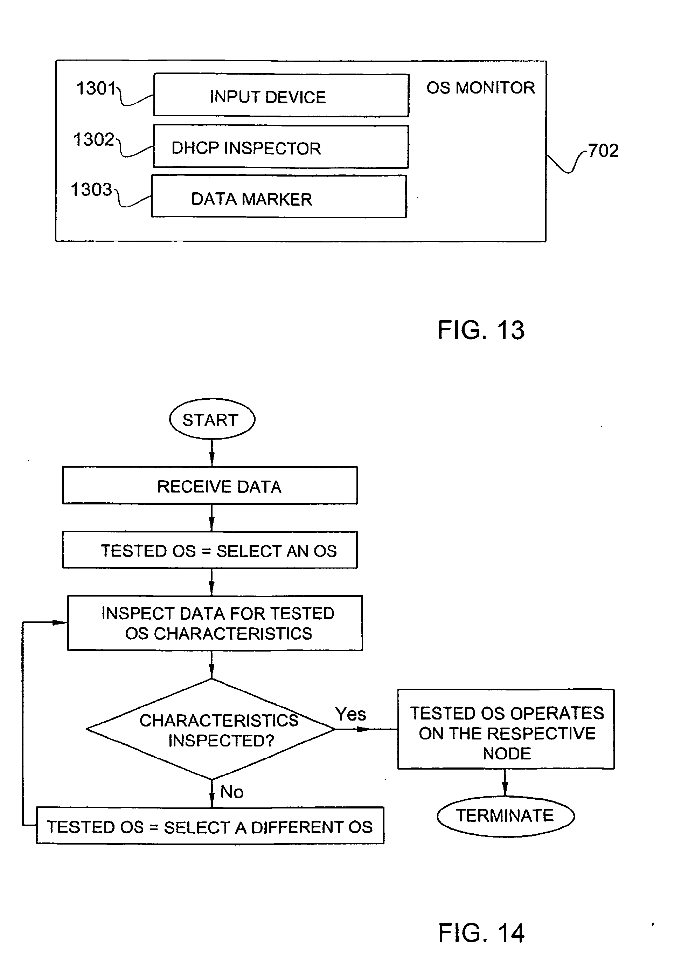

**Fig. 13** is a block diagram illustrating an operating system monitor **702,** according to one embodiment of the invention. The OS monitor includes an input device **1301** for receiving data, the data corresponds to a DHCP message conveyed by a node. a DHCP inspector **1302** for inspecting the received data for characteristics of a known operating system; and a data marker **1303** for indicating that the known operating system operates on the node. It is appreciated that indicating can be done by marking a record respective of the node in a database, by conveying indicative data to other modules internal or external to the query engine, or by any other applicable way.

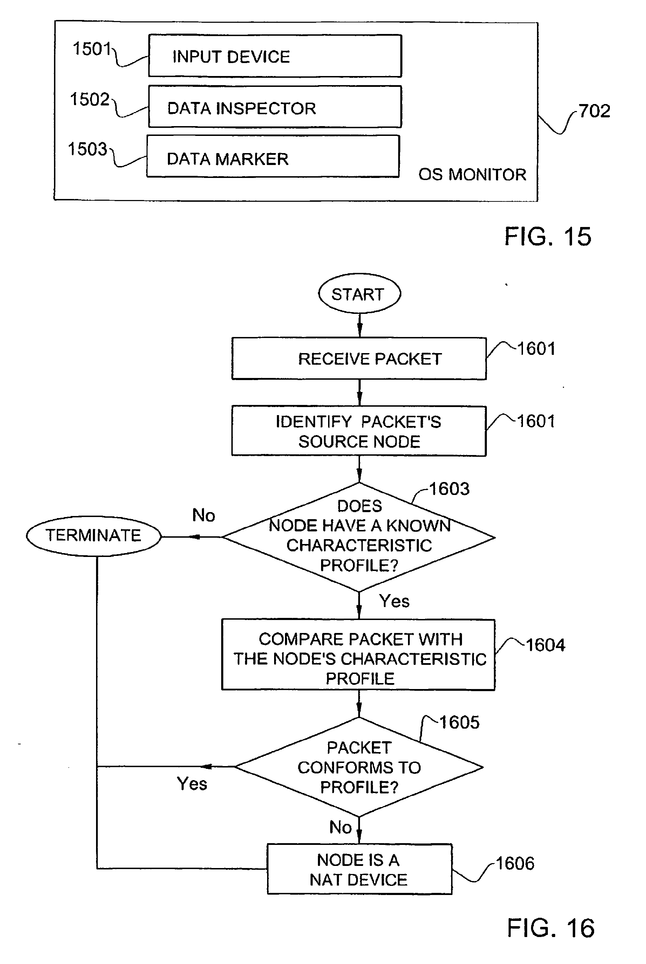

Thus, seeing how can operating systems be discovered based on detected DHCP messages and SYN-requests, it is realized that generally speaking, according to one embodiment of the invention, operating systems can be discovered based on detected data, as illustrated in the flowchart of **Fig. 14****.** **Fig. 15** is a block diagram illustrating an operating system monitor **702,** according to one embodiment of the invention. The OS monitor **702** of **Fig. 15** operated in accordance with the method illustrated in **Fig. 14****.** It includes an input device **1501** for receiving data that corresponds to data conveyed by a node; a data inspector **1502** for inspecting received data for characteristics of a known operating system; and a data marker **1503** that indicates that the known operating system operates on the node. It is appreciated that indicating can be done by marking a record respective of the node in a database, by conveying indicative data to other modules internal or external to the query engine, or by any other applicable way.

Thus, when identifying an operating system that operates on a respective node, the operating system's identification can be inserted to a record in a database, respective of the node.

Seeing alternative embodiments of the OS monitor **702,** it is understood that apart form identifying the identity of an operating system that operates on a respective node, it is possible to determine other details that relate to operations performed by an operating system, such as booting the node. This can be done, for example, based on DHCP messages conveyed by the node.

When a node using DHCP boots it sends a DHCPDISCOVER or a DHCPREQUEST message to a DHCP server. Being an IP protocol, a DHCP message is carried by IP packets. Thus, the IP packet's header fields, such as the IP identification can be checked in addition to the DHCP parameters. When a node that uses DHCP boots, the IP identification field of the initial DHCP packet transmitted by such a node is expected to be zero. Thus, a DHCPDISCOVER or a DHCPREQUEST messages sent by a just-booted node are expected to be carried by IP packets whose IP identification field is zero. That is, when analyzing a DHCP packet whose IP identification field is zero, the OS monitor can infer that the node that sent this message has booted recently. In order to determine if the node boots on the first time or if it reboots, the historical activity of this node can be checked. A node which showed no activity for a certain pre-determined time interval before the time of the boot can be considered as if it boots on the first time. However, if the node did perform activity during the predetermined time interval, this booting activity is considered as reboot.

Furthermore, it is appreciated that sometimes a node reboots following, for example, an operator's instruction to do so. Yet, it happens that the operation of a certain node is unexpectedly stopped, and a reboot is automatically or manually done in order to return the node into operation. It is understood that in such a case of unintended stop (e.g., a crush or halt), communication sessions opened before the event are not properly closed, unlike what happens when the node is orderly shuts down. Therefore, other nodes that communicated with the stopped node can try communicating with it for a while, even though the node does not respond to their communication (sessions referred to as "hanging sessions"). Thus, in addition to detecting the occurrence of a reboot, the analyzer will detect the hanging sessions: the auditing module will continue to audit the sessions whose one participant (the stopped node) is booting, and/or it will detect retries of the operative parties to send packets for which they did not receive acknowledgements. One way or the other, detecting hanging sessions together with detecting that a node reboots, indicate that the node reboots following an unintended stop of its operation.

It should be appreciated that each operating system has respective characteristics that are reflected by data conveyed by this operating system (or by other programs operating thereon) to the network. Therefore, when a node's respective operating system is identified, it is expected that data conveyed by this node to the network would conform to the operating system's characteristics. Together with additional data that is already known about the node, each node can have a respective record of characteristic data, a record referred to as a characteristic profile of a respective node. A node's characteristic profile can include, for example, the IP identification of the node (the operating system can choose the field value either randomly, or the IP identification field value can be increased by 1 from packet to packet.); IP Time-to-Live; IP Don't Fragment (DF) Bit value; TCP Flags; TCP Options (value and order); TCP Initial Window Size; and/or Ports used when initiating a connection. Data conveyed by a node and detected by the network detector is expected to conform to the characteristic profile respective of the node.

Returning to **Fig. 7****,** the operation of the NAT detector **703,** according to one embodiment of the invention is further described in accordance with the flowchart of **Fig. 16****.** It is noted that on **1601** the NAT detector **703** can receive packets directly conveyed by the network detector, it can receive packets conveyed to it by other modules in the analyzer **202,** or it can receive packets stored on the storage device. On **1602** the NAT detector identifies the packet's source node. The source node identification can be done, for example, by the NAT detector itself (by studying the packet's fields) or with the aid of the node's detector **701.**

As was previously explained above, data conveyed by a node is expected to conform to the node's characteristic profile. Therefore, on **1603** the NAT detector checks whether the source node has a respective characteristic profile. If no such profile is found (this may happen, for example, if the node's operating system was not identified yet) the NAT detector terminates the packet's analysis, unable to determine whether its source node is a NAT device or not. However, if the source node's characteristic profile can be determined, on **1604** the NAT detector compares the packet against this characteristic profile. If on **1605** the NAT detector finds disconformities of the packet to the characteristic profile, the source node is considered as a NAT device (see **1606).**

It is further appreciated that when a source node operating behind a NAT device (i.e., a source node that is in a cluster) sends a datagram to a destination node not being part of the cluster, the NAT device receives this datagram and translates it. That is, the NAT device replaces some of the data carried thereby to indicate its own characteristics instead of those of the source node. For example: the source IP and MAC addresses of the datagram will be those of the NAT device instead of the source node. Similarly, when a source node external to the cluster sends a datagram to a destination node in the cluster, it actually sends the datagram to the NAT device, which translates it (the NAT device inserts its own address as the datagram's source identification fields, and the clustered destination node's address in the datagram's destination identification fields) and forwards it to the clustered destination node, However, in most cases the translation performed by the NAT device is not complete, leaving testimony to the original operating system that sent the datagram. These "left over" testimonies can be used by the NAT detector for collecting information relating to the cluster. For example, the NAT detector can count how many types of operating systems exist in the cluster behind the NAT device.

It is appreciated that collecting information relating to the cluster, as described above, is performed in the NAT controller **703.** However, this is non-limiting and other modules can do this instead. For example, the OS monitor **702.**

So far the nodes detector **701,** the OS monitor **702,** the NAT detector **703** and the topology monitor **704** were described. Yet, the embodiment of the analyzer **202** of **Fig. 7** further includes an auditing module **706.** The auditing module **706** can use, for example, SYN/FIN packets analysis in order to detect TCP/IP sessions. SYN and/or SYN-ACK packets are indicative of a new connection opened between two nodes, while a FIN packet indicates of the termination of an open connection. Therefore, by detecting and analyzing SYN and/or FIN packets it is possible to collect information about TCP connections that are currently open in a network.

According to one embodiment of the invention, when the auditing module 706 detects that a session has started between nodes, it marks the nodes' respective records in the database with the session start time. When the auditing module **706** detects that a session was terminated, it marks the nodes' respective records with the session end time.

This is non-limiting and the auditing module **706** can perform additional monitoring tasks, For example, when detecting UDP packets between nodes, the auditing module can mark in the nodes' respective records that they have participated in connectionless communication.

Thus, it is appreciated that by inquiring the data stored in or in association with a node's respective record it is later possible to assess details such as when was this node first detected on the network, when was it first involved in a communication session, how often is it involved in communication sessions etc.

The network statistics module **705** analyses received data in order to record required information stored therein. For example, the network statistics module can collect information such as packet and/or message type (such as ARP, TCP, UDP, ICMP, DHCP, SNMP, HTTP etc.); message function (for example, in DHCP the function can be DHCPDISCOVER, DHCPREQUEST etc.); the source and possibly also the destination address of the packet (including information such as port and/or IP address); and the packet's size. The information collected can be recorded in the database. Additionally, the statistics module uses the collected information for computing network utilization information (such as identifying top bandwidth consumers in the network, what protocols consumes what amount of bandwidth on a certain link, etc.).

It is appreciated that similarly to the other modules, the statistics module can receive data by any applicable way. For example, it can receive it directly from the network detector, or it can retrieve it from the storage device.

Seeing that the network statistics module **705** records in a database information relating to detected data, it is appreciated, for example, that the auditing module **706,** described above, can receive data stored in the database instead of receiving packets directly conveyed directly by the network detector. Then the auditing module can analyze the received data, no matter how it was received. Yet, this is non-limiting and thus correct to any other module operating on the analyzer **202** or having access to data stored thereby.

Finally, before turning to the query engine, the alerts generator **707** is described. The alerts generator responds to several events occurring in the network **101** or in the network information collector **201** and generates alerts that are indicatives of the occurring events. For example, the alerts generator **707** can have a series of predetermined events, such as a specific user who logs into a certain node; a specific node trying to open a communication session with a different specific node; any node who tries to open more than a predetermined number of session within a predetermined duration; a certain node type detected on the network; etc.

The alerts generator **707** can analyze data directly conveyed to it by the network detector **203,** or by other modules in the analyzer **202,** or it can receive data stored in a data base, such as data previously stored by the network statistics module **705** or by the auditing module **706.** It is noted that the alerts generator **707** can receive data from alternative sources such as data conveyed to it from a remote source or data stored on any storage media accessible to the alerts generator **707.**

According to the description provided so far, the analyzer (that is, the analyzer, including the modules operating therein) analyzes detected data such as detected packets and messages. However, the analyzer can analyze other data as well, in order to detect information relating to the communication network and in order to identify missing information. For example, when a new node is connected to the network, it is allowed to manually provide information into the information collector's database, such as information about the IP stack (e.g., IP address), information relating to the hardware, routing information etc. In this case the manually provided information constitutes other data.

**Fig. 8** is a block diagram illustrating an analyzer, according to a different embodiment of the invention. The analyzer of **Fig. 8** includes an input device **801,** for receiving other data as explained above. The other modules of the analyzer are similar to those of **Fig. 7****.**

It was previously mentioned, with reference to **Fig. 7** that different modules can operate on the analyzer **202.** However, sometimes there is missing information that cannot be detected from data conveyed by the nodes, in a manner that is transparent to the nodes. For example, mapping MAC addresses of nodes to switch port addresses. However, this is non-limiting and there are other reasons for missing information. Sometimes information is missing because it was not detected yet, and by waiting further, the analyzer will possibly detect and analyze it. For example, the nodes detector **601** detects the existence of a certain node in the network, but because no DHCP or SYN packets were detected yet, the OS monitor did not detect yet what operating system is operating on that node. Yet another option is that there exist information that was detected before a long time period. Being uncertain if the information is still valid, the analyzer can consider it as missing information.

When the analyzer **202** identifies missing information, it can instruct the query engine **204** to query one or more nodes in the network for the missing information. The operations carried out by the query engine **204** will be described in details below.

In order to instruct the query engine to query for missing information, the analyzer **202** can inspect data available to the information collector **201,** such as data stored in the database, for example. When an incomplete record is found, the analyzer can instruct the query engine to query for the information missing therein. According to a different embodiment, information missing in an incomplete record is identified as missing information only if a predetermined time interval has passed during which the information could have been detected. For example, if a node is detected, the respective operating system operating thereon should be detected within a predetermined time interval. If the analyzer detects that the operating system information is missing in the node's respective record, but the predetermined time interval has not yet elapsed, the analyzer does not identify the operating system information as missing information.

It is realized that different predetermined time intervals can exist for different types and categories of missing information. For example, operating system detection can have one predetermined time interval (referred to as "OS detection time interval"), while TCP session related data is expected to be identified during a different time interval (referred to as "session detection time interval"). The session detection time interval can be shorter or longer in duration compared to the OS detection time interval, or it can be equal thereto. Furthermore, instead of using a predetermined time-interval, a configurable time interval is sometimes used, such as the duration of a TCP session in the latter example. Relating now to information that cannot be gathered from detected data, it is possible to use a pre determined time interval that is substantially equal to zero, or have no pre-determined time interval at all.

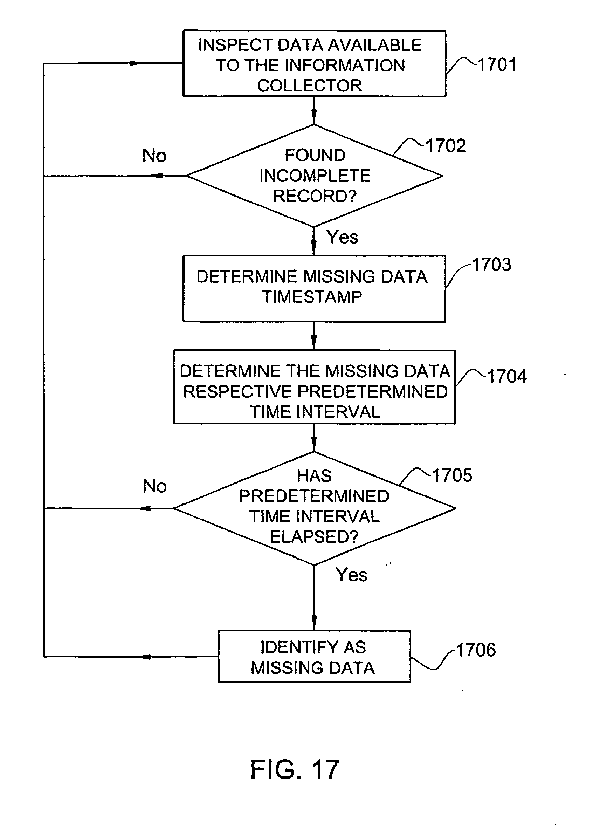

**Fig. 17** is a flowchart illustrating identifying missing information, according to one embodiment of the invention. On **1701** the analyzer inspects the data available to the information collector, such as inspecting records in a database. If on **1702** the analyzer finds an incomplete record, on **1703** it determines the missing data timestamp and the missing data's respective predetermined time interval (on **1704).**

It is understood that in order for the analyzer to be able to determine whether the predetermined time interval has elapsed or not, a time stamp is required, to indicate the time from which this predetermined time interval is measured. Example for a timestamp is the time a node is detected for the first time, the time when a TCP session is opened, the time when a node boots etc.

If on **1705** the analyzer determines that the predetermined time interval has elapsed (for example, by checking if current time minus the timestamp is greater than the predetermined time interval), it identifies the data as missing data (see **1706).**

According to one embodiment of the invention the analyzer can mark the data as missing data. Alternatively it can list the data in a missing data table or list. Then a query activator process can search the list and activate the query engine in order to query for the missing data. Yet, this is non-limiting, and other embodiments are allowed as well. For example, according to a different embodiment when the analyzer identifies the missing data (on **1706)** it can instruct the query engine to query for the missing information.

It is noted that the embodiment of **Fig. 17** is non-limiting and different embodiments and policies for identifying missing data and/or instructing the query engine to query for missing information are allowed as well, e.g., an event driven policy if possible too. For example, in the event of detecting that a certain node opens many TCP sessions within a short time duration, the analyzer suspects this as malicious activity. In order to determine if this is the case indeed, further information is required about this node, its respective operating system and its historical activity. However, according to this example the analyzer finds out that the operating system was not yet detected. In this case the analyzer can instruct the query engine to query the operating system information even though the predetermined time interval may have not elapse yet.

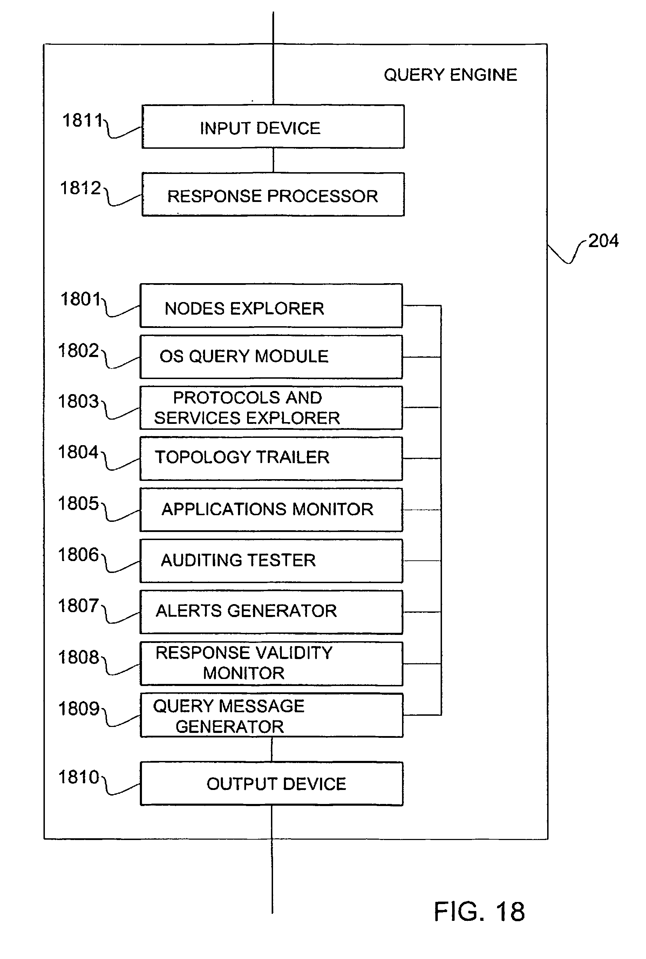

Turning now to describe the query engine **204,** **Fig. 18** is a block diagram illustrating the query engine **204,** according to one embodiment of the invention. The query engine includes several modules, such as a nodes explorer **1801;** an operating system (OS) query module **1802;** a protocols and services explorer **1803;** a topology trailer **1804;** an applications monitor **1805;** an auditing tester **1806;** an alerts generator **1807;** and a response validity monitor **1808.** This embodiment is exemplary and non-limiting, and alternative embodiments are allowed. For example, the query engine can include only several of the modules **1801** to **1807,** it can include different or additional modules, or a combination thereof. An example to an additional module is a configuration control and compliance module, used to verify that a node is configured and installed in accordance or contrary to the practice employed in an organization.

In addition, the query engine can include also a query message generator **1809** that generates the query messages for sending to nodes to be queried and an output device **1810** for conveying (or sending) the query message to the nodes to be queried. The query engine can also include an input device **1811** for receiving at least one response that corresponds to the query message, and a response processor **1812** for processing the at least one response to retrieve information corresponding to the missing information.

Some of the modules included in the query engine **204** query, each, one or more nodes operating in the communication network **101** for missing information. Several modules query information relating to different characteristics of the communication network and/or of the nodes included therein. Such modules are, for example, the nodes explorer **1801** and the OS query module **1802;** The topology trailer **1804;** and the auditing tester **1806.** The nodes explorer **1801** sends data in order to query for nodes operating in the network and/or information about nodes. The OS query module **1802** queries for information relating to operating systems operative on detected nodes. The topology trailer **1804** queries for information relating to the topology of the network. The auditing tester **1806,** queries for sessions information (such as information relating to a TCP/IP session) allowing thereby identification of currently running network services on one or more nodes.

It is noted that the modules described so far in the query engine are complementary to modules operating on the analyzer, querying, for example, for information that cannot be detected thereby, or was not detected thereby yet. It is appreciated that the query engine can include additional modules that are not complementary to analyzer modules. Such modules can have equivalents in the analyzer or not.

The alerts generator **1807** is an example of a query engine module that provides alerts to the operator when pre-determined events occur in the network and/or in the query engine. For example, the OS monitor **1802** cannot detect the operating system that operates on a respective node; a certain node seems to be behind a firewall etc. It is appreciated that the alerts generator **1807** is equivalent to the alerts generator **707** of the analyzer and not complementary thereto.

Before providing detailed description of the modules included in the query engine and suggested embodiments for their methods of operation, it should be realized that it is possible to understand and study information relating to a communication network by querying for information, or in other words, by using measurement traffic, as is already known in the art (see, for example, the articles *"Combining active and passive network measurements to build scalable monitoring systems on the grid"* and *"The Present and Future of Xprobe2, The Next Generation of Active Operating System Fingerprinting",* mentioned in the background of the invention). The measurement traffic includes packets that are specially constructed, that is, packets whose fields include specific values designed for the purpose of the query. The type and content of the packets is determined in accordance with the queried information that is required, e.g., in accordance with the instructions received from the analyzer **202.**

For example, in order to map MAC addresses to switch port addresses, as mentioned above, the query engine could extract, or reconstruct the switch's CAM (Content Addressable Memory) table, e.g., by using appropriate SNMP calls.

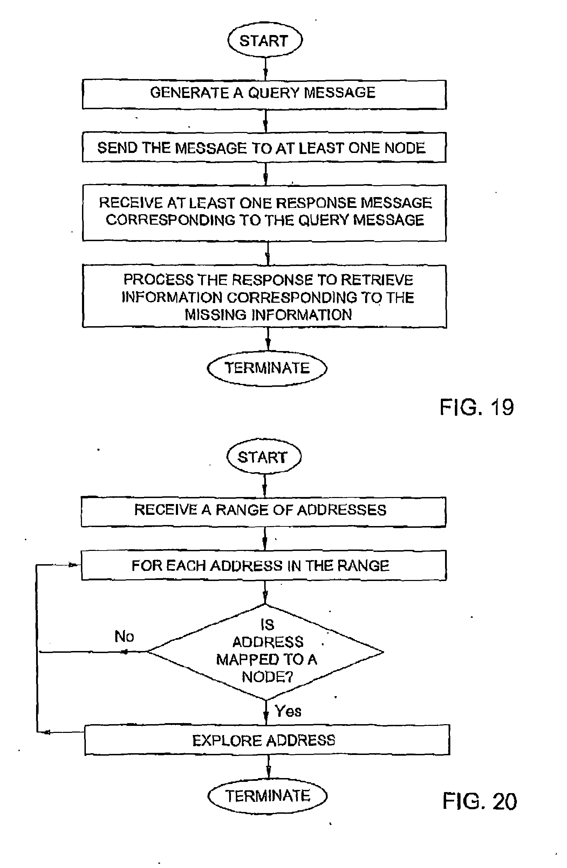

**Fig. 19** is a flowchart illustrating in general the operation of a query engine, according to one embodiment of the invention. According to this embodiment, the query engine constructs, or generates a query message. The query message corresponds to the information that is required, i.e., the missing information. In the latter example the message is an SNMP message. Then the query engine sends the generated message to one or more nodes to be queried.

It is appreciated that a node receiving a query message can generate and send a corresponding response message. In this case the response message be detected by the network detector **203** and analyzed by the analyzer **202.** Alternatively, as it was the query engine that sent the query message, it is most probable that the response message would be sent thereto. Therefore, if applicable, it is also possible to process, or analyze the response in the query engine, retrieving information corresponding to the missing information.

It is also appreciated that even in those cases when the analyzer **202** detects and processes the response, the query engine can still receive the response and fully or partially process it in order to retrieve information. For example, the response validity monitor **1808** can check the response in order to make sure the response is a genuine response and not an artificially crafted one. An artificially crafted response indicate for example that some of the node's kernel parameters were deliberately changed.

For example, if the query message was a SYN request, the response can be one of the following: SYN-ACK; RST; or no response. However, if the response is found by the response validity monitor **1808** to be a SYN-FIN message, this indicates that the message is artificially crafted.

**Fig. 20** is a flowchart illustrating nodes exploration, according to one embodiment of the nodes explorer **1801.** The nodes explorer receives a range of addresses operative on the network, such as an IP subnet. It is appreciated that a subnet includes a limited known number of possible IP addresses, out of which some were already detected by the analyzer, that is, some of the addresses are already mapped to nodes operating on the network. Therefore, for each address in the range, if this address is not yet mapped to a node, the nodes explorer explores the address to see if there is a node carrying this address or not.

There are several ways to explore an address. If the address is an IP address (out of an IP subnet, for example), the nodes explorer can generate an ARP request and send it to the address explored. If there is a node carrying this address, it will respond to the ARP request by sending a reply that identifies the respective MAC address. It is appreciated that the ARP request can be detected by the network detector **203** and analyzed by the analyzer **202.** Alternatively, as the query engine sent the ARP request, it will also receive the reply. Therefore, if applicable, it is also possible to analyze the reply in the query engine and map the IP address to the MAC address thereby. However, receiving no reply indicates that the address is not mapped to a node on the network, or possibly that the node is currently not operative or is behind a firewall.

According to a different embodiment, the nodes explorer can explore an address by constructing and sending an ICMP echo request to the address. Again, receiving no reply indicates that the address is not mapped to a node on the network, or possibly that the node is currently not operative or is behind a firewall.

There are additional exploration possibilities, as can be appreciated by those versed in the art. Some are sending a TCP-SYN request to some port on the address, sending an artificially constructed TCP-ACK response to some port on the address or sending a UDP datagram to a closed port on the address. A closed port can be selected, for example, from the Internet Assigned Numbers Authority's (IANA) list of used ports, as known to those versed in the art. In all these example, receiving no response indicates that the address is not mapped to a node on the network, or possibly that the node is currently not operative or is behind a firewall.

The active auditing tester **1806** tests if certain ports on a certain one or more nodes are open or closed, i.e., the port is currently in use or is not being listened to. Those versed in the art will appreciate that a SYN-ACK response will indicate that the port is currently open, while RST indicates that it is closed.

The active auditing tester **1806** also monitors received data, for fining indications of changes. For example, changes in a switch's MAC table can indicate that one or more MAC addresses have moved to other port on the switch. The alerts generator **1807** will generate an alert, in accordance with which the network operator can check the switch to make sure it was not sabotaged.

The applications monitor **1805** monitors the activity of running processes that the analyzer detected. The applications monitor can monitor that the processes are active, as well as monitoring their response time, It is appreciated that a long response time can indicate that the node is loaded, and fluctuations in the response time can indicate on varying loads affected on the node.

In order to monitor an application, the applications monitor **1805** sends thereto datagrams and requests using the application's protocol. For example, in order to monitor the activity of a web server, the applications monitor **1805** can initiate a connection using the TCP handshake sequence, followed by a HTTP GET request for the root page. Monitoring the response time (if a response is received at all) provides indications of the web server's condition.

The topology trailer **1804** determines topology of the network that is missing from the analyzer collected information. Missing topology information is considered as missing data as discussed above. Doing this, the topology trailer **1804** extracts, or reconstructs switches' CAM tables, for example by using SNMP or switches' APIs (possibly even proprietary APIs the topology trailer **1804** is designed to operate and communicate with). The topology trailer **1804** also extracts routers' routing tables. This can also be done using SNMP and routes' APIs. It is appreciated that by sending ARP messages and processing the responses, the topology trailer **1804** can try to reconstruct the routing tables. By being familiar with the routing tables, the topology trailer **1804** can learn about subnets and about other routers used for hops, and for routing data to those subnets.

This is non-limiting and the topology trailer **1804** can have additional tasks and responsibilities. Using SNMP and APIs, for example, the topology trailer **1804** can learn about a router's interfaces, such as their respective MAC addresses, IP addresses and masks. Subnet masks, for example, can teach about additional subnets connected to the router.

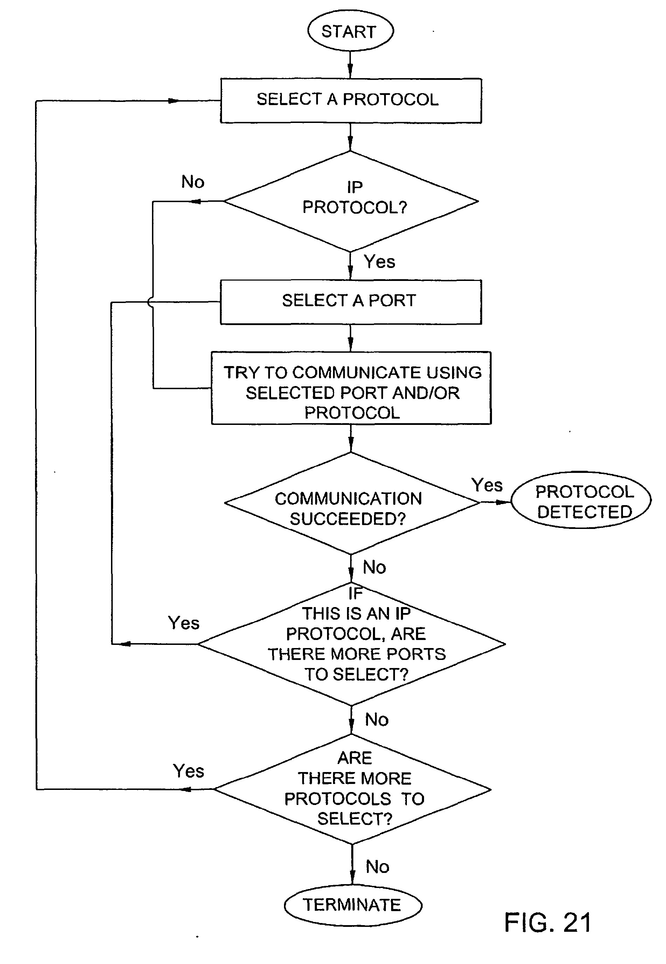

The protocols and services explorer **1803** tries to identity services and protocols operative on a port, for example, in accordance with the flowchart of **Fig. 21****.** After opening a TCP connection to the port the protocols and services explorer **1803** tries to communicate with the service operating thereon. First, the protocols and services explorer **1803** can try to communicate in a protocol listed in the IANA list of ports numbers (see http://www.iana.org/assignments/port-numbers), if the port is listed therewith at all. If no response is received, or if the port is not listed in the IANA list, the protocols and services explorer **1803** can try using common protocols it is pre-configured to use. For example, HTTP, telnet or even proprietary protocols.

In addition or in parallel to trying to open TCP ports, the protocols and services explorer **1803** can try to open UDP ports, and perform similar operations previously described in connection with TCP, but this time, using UDP datagrams. It is appreciated that when trying to open a closed UDP port, the protocols and services explorer **1803** will receive an ICMP Port Unreachable error message. If a port has been opened successfully, the protocols and services explorer **1803** can try to explore the identity of the application operating on this port, using the IANA ports list and/or configurable list of applications.

It is appreciated that the description above, in connection to **Fig. 21** is non-limiting and the protocols and services explorer **1803** can test other protocols as well, apart from TCP and UDP, such as ICMP, IGMP (Internet Group Management Protocol) etc. For example, the protocols and services explorer **1803** can check the IANA list of protocols (see http://www.iana,org/assignments/protocol-numbers) to find so-called standard protocols or well-known protocols. Again, it is possible to use also a reconfigured list of protocols (including also proprietary protocols) in order to try to communicate with the node.

The OS query module **1802,** uses operating system fingerprinting tests in order to determine the operating system operating on a node. It is appreciated that the tests performed are affected by the character of the missing data determined by the analyzer **202.**

For example, the analyzer has received and analyzed a SYN request sent by a node operating on the network. The SYN request parameters are as follow:
tcp_syn_window_size = 16384
tcp_syn_IP_ID = !0
tcp_syn_DF = 1
tcp_syn_TTL = 128
tcp_syn_options_order = "mss (1460) NOP NOP sackok"
tcp_syn_size = 48

Because these parameters characterize both Microsoft's Windows 2000 and Windows 2003, the analyzer cannot determine which out of the two is the operating system operating on the node, i.e., the operating system is missing data in this case. Yet, in this case the options are lessened to be one of the two mentioned operating systems. Thus it is clear, for example, that the operating system is not Linux.

It is the OS query module **1802** that will try to distinguish between the two by performing operating system fingerprinting tests. It is appreciated that there are a number of operating system fingerprinting tests, such as tests sending ICMP echo requests; tests sending SYN requests; tests trying to send data to a UDP port; etc. According to one embodiment of the invention, a devoted sub-module performs each type of test respective thereto. In the example, the sub-modules are referred to as sub-module A; sub-module B; sub-module C; etc.

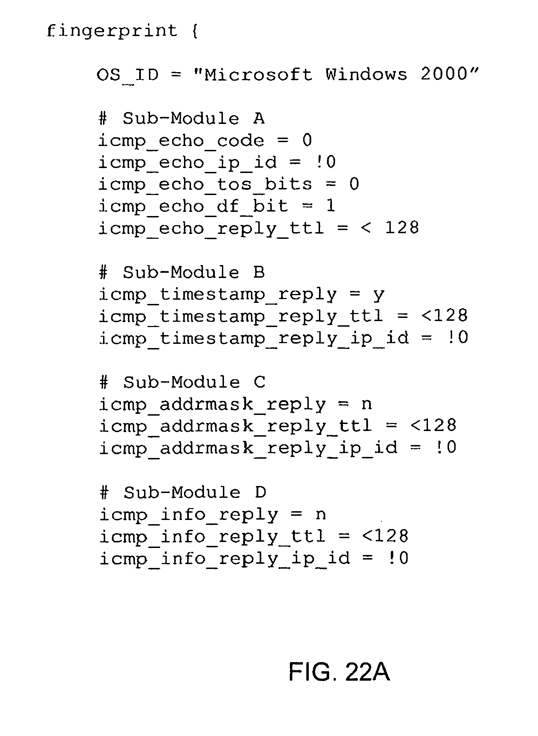

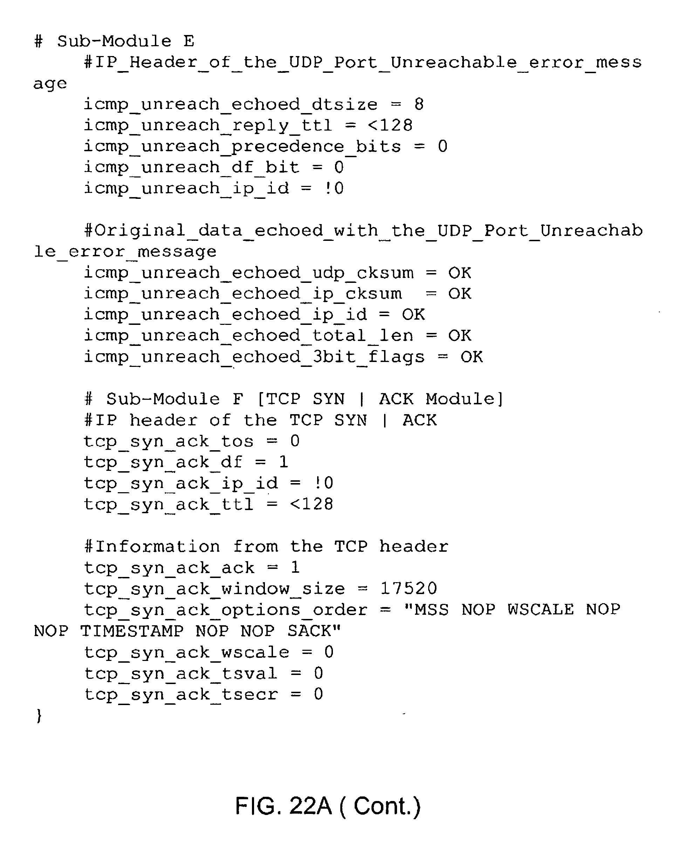

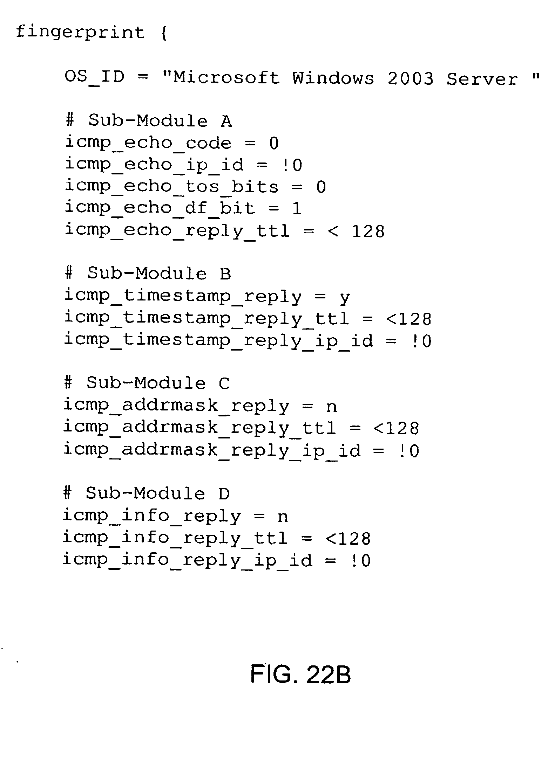

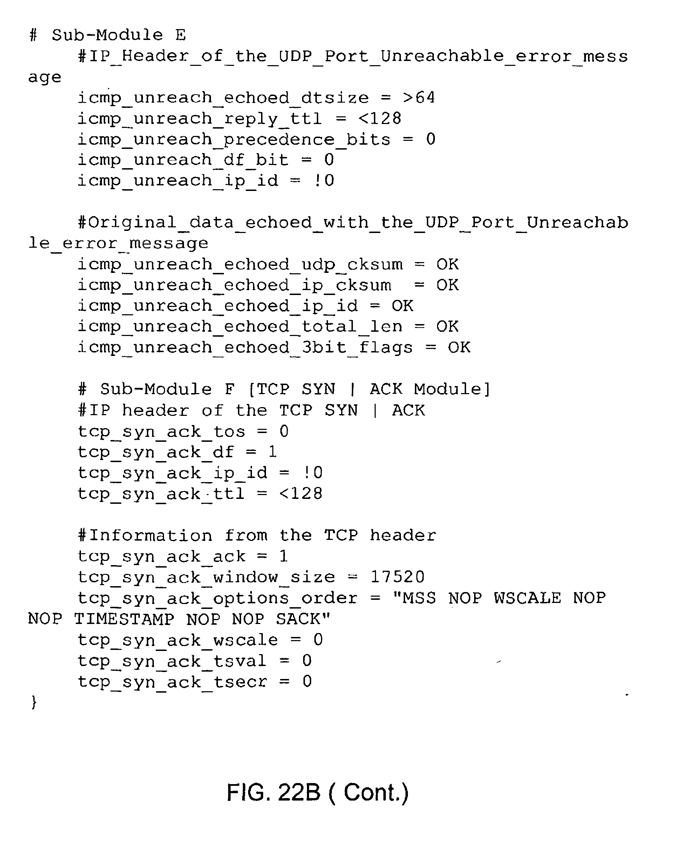

In order to avoid performing all the operating system fingerprinting tests available to the OS query module **1802,** the OS query module **1802** has a group of lists accessible thereto, wherein each list in the group includes fingerprints received from one operating system in response to a test performed by one sub-module. **Fig. 22A** illustrates an exemplary list of fingerprints characterizing the Microsoft Windows 2000 operating system, while **Fig. 22B** illustrates an exemplary list of fingerprints characterizing the Microsoft Windows 2000 operating system. This is non-limiting and there can be additional fingerprint lists, of additional operating systems. Additionally, the lists of **Figs. 22A** and **22B** include fingerprints received from six different tests, represented by six different sub-modules (namely A, B, C, D E, and F). It is appreciated that this number (six) is also non-limiting and the OS query module **1802** can perform any number of tests by any number of sub-modules, including additional tests not illustrated in the example, different tests replacing those of the example or even a smaller number of tests.

Comparing the results received by sub-module A, i.e., the fingerprints received by sending an ICMP echo request to a Windows 2000 and to a Windows 2003 operating systems, it is illustrated that the fingerprints are identical, i.e., they do not allow to resolve which of the two operating systems is operating on the respective node. Likewise, the fingerprints received by the tests of sub-modules B, C, D and F are non-resolving too. However, comparing the results received by the test of sub-module E reveals a difference between the fingerprints of Windows 2000, and those of Windows 2003. Sub-module E sends an artificially crafted UDP datagram to a closed port on the node, wherein in windows 2000 the response (an ICMP UDP Port Unreachable error message) includes "icmp_unreach_echoed_dtsize = 8" while in Windows 2003 it includes "icmp_unreach_echoed_dtsize = >64".

Understanding this, it is appreciated that the OS query module **1802** can avoid performing the tests of sub-modules A, B, C, D and F while the test of sub-module E is expected to resolve between the two operating systems.

In the latter example there was only one test that could reveal a difference between the fingerprints of Windows 2000, and those of Windows 2003 (that is, the test of sub-module E). However, it happens that there are more than one such tests. In this case, it is possible to randomly choose between these tests. However, sometimes there is a need to resolve between more than two operating systems, which complicates the querying process. In such an example, sometimes there is a need to perform more that one test. Selecting what tests to perform, and in what order, can become a significant task though.

According to an embodiment of the invention, operating system fingerprinting tests performed by the OS query module **1802** can be associated with different weights, indicative of the significance of each test. Weight is assigned with each operating system fingerprinting test participating in the operating system fingerprinting process (i.e., with each sub-module). Weights are also assigned with each parameter within each test. Statistical analysis is performed in order to identify the significance that each test and each test parameter value should have, allowing the weight assignment thereto.

One statistical algorithm that can be used is a support vector machine algorithm, known to those versed in the art. Another is a Matrix based fingerprints matching statistical algorithm. This latter algorithm is based on a statistical calculation of scores for each performed test as described below, calculation that is a simplified form of OCR recognition.

If there are i possible operating systems (OS₁, OS₂, ..., OS*ᵢ*), upon initialization, each fingerprinting test, which is implemented as an independent sub-module builds its own vector of possible 'test matches' for each operating system (OS → (OS₁, OS₂, ..., OS*ᵢ*)). Once the fingerprinting test is performed, the program examines the packet(s) received as the result of the fingerprinting test and places the appropriate 'score' into the appropriate operating system row. For example, the 'score' value can take one of the following values:
- YES(3)
- PROBABLY_YES(2)
- PROBABLY_NO(1)
- NO(0).

Once all tests are completed, a run through is performed through all the columns during which the summary of each operating system is calculated. The top-score OS{x} (X, Y, Z, or D) will be declared as the final result.

This is illustrated in the following Table 1:

**Table 1**

| | **OS₁** | **OS₂** | **OS₃** | ... | **OS*ᵢ*** |
|---|---|---|---|---|---|
| **Test₁** | score | score | score | | score |
| **Test₂** | score | score | score | | score |
| **Test₃** | score | score | score | | score |
| ... | | | | | score |
| **Testₙ** | score | score | score | | score |
| **Totals** | X | Y | Z | | D |

Finally, it should be appreciated that the methods and systems described above can be used for providing security control and network management capabilities. For example, it was previously mentioned that switch sabotage can be detected by extracting the switch CAM table. It was also mentioned that the response validity monitor **1808** can check a response in order to verify that the response is a genuine response and not an artificially crafted one. It is understood that security control provides managing at least one vulnerability of the network, for example, by detecting an actual intrusion into the network and by distinguishing between an active intrusion and a false intrusion.

In addition, it was mentioned that the applications monitor **1805** monitors the activity of running, including their response time, which is an indicative to loads affected on a node loaded. It is appreciated that heavy load can indicate that a security problem exists yet it can also indicate the requirement to upgrade the network or nodes therein.

## Claims

1. A method of collecting information relating to a communication network (101) and to nodes (103, 104, 106) operating therein, the method comprising
enabling passive detection of data conveyed by one or more nodes (103, 104, 106) detected as operating in the communication network (101), said detection of data provided in a manner that is transparent to said one or more detected nodes (103, 104, 106), to yield passively detected data;
analyzing said passively detected data to identify missing information, wherein said missing information comprises missing information relating to at least one of said one or more detected nodes (103, 104, 106) and/or missing information relating to said communication network (101);
analyzing said passively detected data and/or information describing said missing information to identify among nodes (103, 104, 106) operating in said communication network (101) one or more nodes (103, 104, 106) to be queried for said missing information, to yield queried nodes (103, 104, 106); and
querying at least one of said identified queried nodes (103, 104, 106) if missing information matches one or more redefined conditions varying for different types of missing information, thereby enabling collection of said missing information actively.

2. The method of Claim 1, wherein said passively detected data comprise information selected from a group consisting of: information relating to operating systems of detected nodes (103, 104, 106), information related to network running processes operating on the detected nodes (103, 104, 106), and information relating to node identification.

3. The method of Claims 1 or 2 wherein the missing information is selected from a group consisting of: information relating to operating systems of respective nodes (103, 104, 106), node identification information, information related to network running processes operating on the respective nodes (103, 104, 106), information related to local running processes operating on the respective nodes (103, 104, 106), information relating to hardware components associated with the respective nodes, and topology information related to physical topology of the communication network (101).

4. The method of anyone of Claims 1 - 3, wherein the queried nodes (103, 104, 106) merely comprise nodes (103, 104, 106) already mapped or wherein the queried nodes (103, 104, 106) merely comprise nodes (103, 104, 106) not yet mapped.

5. The method of anyone of Claims 1 - 4, further comprising:
generating a query message corresponding to said missing information for conveying said query message to one or more queried nodes (103, 104, 106);
receiving at least one response that corresponds to the query message; and
processing the at least one response to retrieve information corresponding to said missing information.

6. A network information collector (201) operable to collect information relating to a communication network (101) and to nodes (103, 104, 106) operating therein, the network collector (201) comprising:
a network detector (203) operable to enable passive detection of data conveyed by one or more nodes (103, 104, 106) detected as operating in the communication network (101), said detection of data provided in a manner that is transparent to said one or more detected nodes (103, 104, 106), to yield passively detected data;
an analyzer (202) operable to analyze said passively detected data to identify missing information, wherein said missing information comprises missing information relating to at least one of said one or more detected nodes (103, 104, 106) and/or missing information relating to said communication network (101), and to analyze said passively detected data and/or information describing said missing information to identify among nodes (103, 104, 106) operating in said communication network (101) one or more nodes (103, 104, 106) to be queried for said missing information, to yield queried nodes (103, 104, 106); and
a querying engine (204) operable to query at least one of said identified queried nodes (103, 104, 106), thereby enabling collection of said missing information actively, wherein the analyzer (202) is operable to instruct the query engine (204) to start querying if missing information matches one or more predefined conditions.

7. The network information collector (201) of Claim 6, wherein said passively detected data comprise information selected from a group consisting of:
information relating to operating systems of detected nodes (103, 104, 106), information related to network running processes operating on the detected nodes (103, 104, 106), and information related to node identification.

8. The network information collector (201) of Claims 6 or 7 wherein said missing information is selected from a group consisting of: information relating to operating systems of respective nodes (103, 104, 106), node identification information, information related to network running processes operating on the respective nodes (103, 104, 106), information rela ted to local running processes operating on the respective nodes (103, 104, 106), information relating to hardware components associated with the respective nodes, and topology information related to physical topology of the communication network (101).

9. The network information collector (201) of anyone of Claims 6 - 8, wherein the queried nodes (103, 104, 106) comprise merely nodes (103, 104, 106) that are already mapped or wherein the queried nodes (103, 104, 106) merely comprise nodes (103, 104, 106) that are not already mapped.

10. The network information collector (201) of anyone of Claims 6 - 9, wherein the query engine (204) further comprises: a query message generator (1809) operable to generate a query message corresponding to the missing information for conveying said query message to one or more queried nodes (103, 104, 106); an input device (801, 1301, 1501, 1811) operable to receive at least one response that corresponds to the query message; and a response processor (1812) operable to process the at least one response to retrieve information corresponding to the missing information.

11. A computer program comprising computer program code means for performing all the steps of anyone of Claims 1 - 5 when said program is run on a computer.

12. A computer program as claimed in Claim 11 embodied on a computer readable medium.

## Patentansprüche

1. Ein Verfahren zum Sammeln von Informationen bezüglich eines Kommunikationsnetzes (101) und bezüglich Knoten (103, 104, 106), die darin arbeiten, wobei das Verfahren Folgendes umfasst:
das Ermöglichen der passiven Erfassung von Daten, die von einem oder mehreren Knoten (103, 104, 106) übertragen werden, welche als in dem Kommunikationsnetz (101) arbeitend erfasst werden, wobei die Erfassung von Daten auf eine Art und Weise durchgeführt wird, die für den einen oder die mehreren erfassten Knoten (103, 104, 106) transparent ist, um passiv erfasste Daten zu liefern;
die Analyse der passiv erfassten Daten, um fehlende Informationen zu identifizieren, wobei die fehlenden Informationen Folgendes umfassen: fehlende Informationen bezüglich mindestens einem der einen oder mehreren erfassten Knoten (103, 104, 106) und/oder fehlende Informationen bezüglich des Kommunikationsnetzes (101);
die Analyse der passiv erfassten Daten und/oder Informationen, die die fehlenden Informationen beschreiben, um unter den Knoten (103, 104, 106), die in dem Kommunikationsnetz (101) arbeiten, einen oder mehrere Knoten (103, 104, 106) zu bestimmen, die auf die fehlenden Informationen hin abzufragen sind, um abgefragte Knoten (103, 104, 106) zu ergeben; und
die Abfrage von mindestens einem der identifizierten abgefragten Knoten (103, 104, 106), ob die fehlenden Informationen eine oder mehrere vordefinierte Bedingungen erfüllen, die für verschiedene Arten fehlender Informationen variieren, wodurch das Sammeln der fehlenden Informationen aktiv ermöglicht wird.

2. Das Verfahren gemäß Anspruch 1, wobei die passiv erfassten Daten Informationen umfassen, die gewählt sind aus einer Gruppe bestehend aus: Informationen bezüglich Betriebssystemen erfasster Knoten (103, 104, 106), Informationen bezüglich Netzwerk-Betriebsprozessen, die auf den erfassten Knoten (103, 104, 106) ablaufen, und Informationen bezüglich der Knotenidentifikation.

3. Das Verfahren gemäß Anspruch 1 oder 2, worin die fehlenden Informationen gewählt sind aus einer Gruppe, bestehend aus: Informationen bezüglich Betriebssystemen entsprechender Knoten (103, 104, 106), Knotenidentifikationsinformationen, Informationen bezüglich Netzwerk-Betriebsprozessen, die auf den entsprechenden Knoten (103, 104, 106) ablaufen, Informationen bezüglich lokaler Betriebsprozesse, die auf den entsprechenden Knoten (103, 104, 106) ablaufen, Informationen bezüglich Hardwarekomponenten, die mit den entsprechenden Knoten verknüpft sind, und Topologie-Informationen bezüglich der physikalischen Topologie des Kommunikationsnetzes (101).

4. Das Verfahren gemäß einem beliebigen der Ansprüche 1-3, worin die abgefragten Knoten (103, 104, 106) nur Knoten (103, 104, 106) umfassen, die bereits abgebildet wurden, oder worin die abgefragten Knoten (103, 104, 106) nur Knoten (103, 104, 106) umfassen, die noch nicht abgebildet wurden.

5. Das Verfahren gemäß einem beliebigen der Ansprüche 1-4, das weiter Folgendes umfasst:
Erzeugung einer Abfragenachricht, die den fehlenden Informationen entspricht, um die Abfragenachricht an einen oder mehrere abgefragte Knoten (103, 104, 106) zu übertragen;
Empfang mindestens einer Antwort, die der Abfragenachricht entspricht; und
Verarbeitung der mindestens einen Antwort, um Informationen abzurufen, die den fehlenden Informationen entsprechen.

6. Ein Netzinformationskollektor (201), der betätigt werden kann, um Informationen bezüglich eines Kommunikationsnetzes (101) und bezüglich Knoten (103, 104, 106) zu sammeln, die darin arbeiten, wobei der Netzkollektor (201) Folgendes umfasst:
einen Netzdetektor (203), der betätigt werden kann, um die passive Erfassung von Daten zu ermöglichen, die von einem oder mehreren Knoten (103, 104, 106) übertragen werden, welche als in dem Kommunikationsnetz (101) arbeitend erfasst werden, wobei die Erfassung von Daten auf eine Art und Weise durchgeführt wird, die für den einen oder die mehreren erfassten Knoten (103, 104, 106) transparent ist, um passiv erfasste Daten zu liefern;
einen Analysator (202), der betätigt werden kann, um die passiv erfassten Daten zu analysieren, um fehlende Informationen zu identifizieren, wobei die fehlenden Informationen Folgendes umfassen: fehlende Informationen bezüglich mindestens einem der einen oder mehreren erfassten Knoten (103, 104, 106) und/oder fehlende Informationen bezüglich des Kommunikationsnetzes (101), und um die passiv erfassten Daten und/oder Informationen zu analysieren, die die fehlenden Informationen beschreiben, um unter den Knoten (103, 104, 106), die in dem Kommunikationsnetz (101) arbeiten, einen oder mehrere Knoten (103, 104, 106) zu bestimmen, die auf die fehlenden Informationen hin abzufragen sind, um abgefragte Knoten (103, 104, 106) zu ergeben; und
eine Abfragemaschine (204), die betätigt werden kann, um mindestens einen der identifizierten abgefragten Knoten (103, 104, 106) abzufragen und so das Sammeln der fehlenden Informationen aktiv zu ermöglichen, wobei der Analysator (202) betätigt werden kann, um die Abfragemaschine (204) anzuweisen, mit der Abfrage zu beginnen, wenn die fehlenden Informationen eine oder mehrere vordefinierte Bedingungen erfüllen.

7. Der Netzinformationskollektor (201) gemäß Anspruch 6, wobei die passiv erfassten Daten Informationen umfassen, die gewählt sind aus einer Gruppe bestehend aus
Informationen bezüglich Betriebssystemen erfasster Knoten (103, 104, 106), Informationen bezüglich Netzwerk-Betriebsprozessen, die auf den erfassten Knoten (103, 104, 106) ablaufen, und Informationen bezüglich der Knotenidentifikation.

8. Der Netzinformationskollektor (201) gemäß Anspruch 6 oder 7, worin die fehlenden Informationen gewählt sind aus einer Gruppe, die aus Folgendem besteht: Informationen bezüglich Betriebssystemen entsprechender Knoten (103, 104, 106), Knotenidentifikationsinformationen, Informationen bezüglich Netzwerk-Betriebsprozessen, die auf den entsprechenden Knoten (103, 104, 106) ablaufen, Informationen bezüglich lokaler Betriebsprozesse, die auf den entsprechenden Knoten (103, 104, 106) ablaufen, Informationen bezüglich Hardwarekomponenten, die mit den entsprechenden Knoten verknüpft sind, und Topologie-Informationen bezüglich der physikalischen Topologie des Kommunikationsnetzes (101).

9. Der Netzinformationskollektor (201) gemäß einem beliebigen der Ansprüche 6-8, wobei die abgefragten Knoten (103, 104, 106) nur Knoten (103, 104, 106) umfassen, die bereits abgebildet sind, oder wobei die abgefragten Knoten (103, 104, 106) nur Knoten (103, 104, 106) umfassen, die noch nicht abgebildet sind.

10. Der Netzinformationskollektor (201) gemäß einem beliebigen der Ansprüche 6-9, worin die Abfragemaschine (204) weiter Folgendes umfasst: einen Abfragenachrichtengenerator (1809), der betätigt werden kann, um eine Abfragenachricht zu erzeugen, die den fehlenden Informationen entspricht, um die Abfragenachricht an einen oder mehrere abgefragte Knoten (103, 104, 106) zu übertragen; eine Eingabevorrichtung (801, 1301, 1501, 1811), die betätigt werden kann, um mindestens eine Antwort zu empfangen, die der Abfragenachricht entspricht; und einen Antwortprozessor (1812), der betätigt werden kann, um die mindestens eine Antwort zu verarbeiten, um Informationen abzurufen, die den fehlenden Informationen entsprechen.

11. Ein Computerprogramm, das Computerprogrammcodemittel umfasst, um alle Schritte gemäß einem beliebigen der Ansprüche 1-5 durchzuführen, wenn das Programm auf einem Computer ausgeführt wird.

12. Ein Computerprogramm wie in Anspruch 11 beansprucht, ausgeführt auf einem maschinenlesbaren Medium.

## Revendications

1. Procédé pour collecter des informations relatives à un réseau de communication (10) et à des noeuds (103, 104, 106) y opérant, le procédé comprenant de:
permettre la détection passive de données acheminées par un ou plusieurs noeuds (103, 104, 106) détectés comme opérant dans le réseau de communication (101), ladite détection de données étant fournie dans un mode qui est transparent audit un ou plusieurs noeud détectés (103, 104, 106), afin de produire passivement les données détectées;
analyser lesdites données détectées passivement pour identifier une information manquante, dans lequel ladite information manquante comprend information manquante relative à au moins l'un desdits un ou plusieurs noeuds détectés (103, 104, 106) et/ou information manquante relative à ledit réseau de communication (101) ;
analyser lesdites données détectées passivement et/ou l'information décrivant ladite information manquante pour identifier parmi les noeuds (103, 104, 106) opérant dans ledit réseau de communication (101) un ou plusieurs noeuds (103, 104, 106) à interroger pour ladite information manquante, pour produire les noeuds interrogés (103, 104, 106) ; et
interroger au moins l'un desdits noeuds interrogés identifiés (103, 104, 106) si l'information manquante adhère à l'une ou plusieurs conditions prédéfinies variant pour différents types d'information manquante, permettant ainsi de collecter ladite information manquante activement.

2. Procédé selon la Revendication 1, dans lequel lesdites données détectées passivement comprennent information sélectionnée d'un groupe composé de : information relative à des systèmes opératifs de noeuds détectés (103, 104, 106), information relative à des processus en cours d'exécution de réseau opérant sur les noeuds détectés (103, 104, 106), et information relative à l'identification des noeuds.

3. Procédé selon la Revendication 1 ou 2, dans lequel l'information manquante est sélectionnée parmi le groupe composé de : information relative aux systèmes opératifs des noeuds respectifs (103, 104, 106), information d'identification de noeuds, information relative à des processus en cours d'exécution de réseau opérant sur les noeuds respectifs (103, 104, 106), information relative à des processus en cours d'exécution locale opérant sur les noeuds respectifs (103, 104, 106), information relative à des composants hardware associés aux noeuds respectifs, et information topologique relative à la topologie physique du réseau de communication (101).

4. Procédé selon l'une quelconque des Revendication 1-3, dans lequel les noeuds interrogés (103, 104, 106) comprennent simplement des noeuds (103,104,106) déjà mappés ou dans lequel les noeuds interrogés (103, 104, 106) comprennent simplement noeuds (103, 104, 106) qui n'ont pas encore été mappés.

5. Procédé selon l'une quelconque des Revendications 1-4, comprenant en outre de :
générer un message d'interrogation correspondant à ladite information manquante pour acheminer ledit message d'interrogation à l'un ou plusieurs noeuds interrogés (103,104, 106);
recevoir au moins une réponse correspondant au message d'interrogation ; et
traiter l'au moins une réponse pour récupérer l'information correspondant à ladite information manquante.

6. Collecteur d'information de réseau (201) opérable pour collecter de l'information relative à un réseau de communication (101) et à des noeuds (103, 104, 106) y opérant, le collecteur de réseaux (201) comprenant:
un détecteur de réseau (203) opérable pour permettre la détection passive de données acheminées par un ou plusieurs noeuds (103, 104, 106) détectés comme opérant dans le réseau de communication (101), ladite détection de données étant fournie dans un mode qui est transparent auxdits un ou plusieurs noeuds détectés (103, 104, 106), pour produire des données détectées passivement;
un analyseur (202) opérable pour analyser lesdites données détectées passivement pour identifier l'information manquante, dans lequel ladite information manquante comprend information manquante relative à au moins l'un desdits un ou plusieurs noeuds détectés (103, 104, 106) et/ou information manquante relative à ledit réseau de communication (101), et pour analyser lesdites données détectées passivement et/ou l'information décrivant ladite information manquante pour identifier parmi les noeuds (103,104,106) opérant dans ledit réseau de communication (101) un ou plusieurs noeuds (103,104,106) à interroger pour ladite information manquante, pour produire des noeuds d'interrogation (103, 104, 106) : et
un moteur de recherche (204) opérable pour interroger au moins l'un desdits noeuds interrogés identifiés (103, 104, 106), en permettant ainsi de collecter ladite information manquante activement, dans lequel l'analyseur (202) est opérable pour instruire le moteur de recherche (204) de commencer à interroger si l'information manquante adhère à une ou plusieurs conditions prédéfinies.

7. Collecteur d'information de réseau (201) selon la Revendication 6, dans lequel lesdites données détectées passivement comprennent l'information sélectionnée parmi le groupe comprenant:
information relative aux systèmes opératifs des noeuds détectées (103,104,106), et information relative a processus en cours d'exécution de réseau opérant jus les noeuds détectés et information relative à l'identification de noeuds.

8. Collecteur d'information de réseau (201) selon la Revendication 6 ou 7, dans lequel ladite information manquante est sélectionnée parmi le groupe qui comprend : information relative aux systèmes opératifs de noeuds respectifs (103, 104, 106), information d'identification de noeuds, information relative aux processus en cours d'exécution de réseaux opérant sur les noeuds respectifs (103, 104, 106), l'information relative à des processus en cours d'exécution locale opérant sur les noeuds respectifs (103,104,106), information relative à des composant hardware associés aux noeuds respectifs, et information topologique relative à la topologie physique du réseau de communication (101).

9. Collecteur d'information de réseau (201) selon l'une quelconque des Revendication 6-8, dans lequel les noeuds interrogés (103, 104, 106) comprennent simplement les noeuds (103, 104, 106) qui ont été déjà mappés ou dans lequel les noeuds interrogés (103, 104, 106) comprennent simplement noeuds (103, 104, 106) qui n'ont pas encore été tracés.

10. Collecteur d'information de réseaux (201) selon l'une quelconque des Revendications 6-9, dans lequel le moteur de recherche (204) comprend en outre : un générateur de message d'interrogation (1809) opérable pour générer un message d'interrogation correspondant à une information manquante pour acheminer ledit message d'interrogation à un ou plusieurs noeuds interrogés (103, 104, 106) ; un dispositif d'entrée (801, 1301, 1501, 1811) opérable pour recevoir au moins une réponse correspondant au message d'interrogation ; et un processeur de réponse (1812) opérable pour traiter l'au moins une réponse pour récupérer l'information correspondant à l'information manquante.

11. Programme d'ordinateur comprenant des moyens de code de programme d'ordinateur pour exécuter toutes les étapes de l'une quelconque des Revendications 1-5, dans lequel ledit programme est exécuté sur un ordinateur.

12. Programme d'ordinateur tel que revendiqué dans la Revendication 11 incorporé sur un moyen lisible par ordinateur.
